# EUROPÄISCHE PATENTSCHRIFT

(11) **EP 1 290 039 B1**
(45) Veröffentlichungstag und Bekanntmachung des Hinweises auf die Patenterteilung: **03.12.2003**
(21) Anmeldenummer: 01964972.2
(22) Anmeldetag: 13.06.2001
(51) Int. Cl.: C08F 4/02, C08F 4/60, C08F 10/00, C08F 110/02, C08F 110/00

(54) **KATALYSATORSYSTEM ZUR OLEFINPOLYMERISATION MIT EINEM CALCINIERTEN HYDROTALCIT ALS TRÄGERMATERIAL**
CATALYST SYSTEM FOR CARRYING OUT OLEFIN POLYMERIZATION COMPRISING A CALCINED HYDROTALCITE SERVING AS A SUPPORTING MATERIAL
SYSTEME CATALYSEUR POUR LA POLYMERISATION D'OLEFINES COMPRENANT, COMME MATERIAU SUPPORT, UNE HYDROTALCITE CALCINEE

(30) Priorität: 13.06.2000 DE 10028432
(43) Veröffentlichungstag der Anmeldung: 12.03.2003
(73) Patentinhaber: Basell Polyolefine GmbH, 50389 Wesseling (DE)
(72) Erfinder: MIHAN, Shahram, 67061 Ludwigshafen (DE); SCHOPF, Markus, 68159 Mannheim (DE); FRAAIJE, Volker, 60325 Frankfurt (DE); OBERHOFF, Markus, 55118 Mainz (DE); PACZKOWSKI, Nicola, Loveland, OH 45140 (US); BIDELL, Wolfgang, 68159 Mannheim (DE); WULFF-DÖRING, Joachim, 67227 Frankenthal (DE)
(86) Internationale Anmeldenummer: EP0106663
(87) Internationale Veröffentlichungsnummer: WO01096417

(56) Entgegenhaltungen:
- EP-A- 0 982 328
- WO-A-97/17136
- CA-A- 2 237 231

## Beschreibung

Die vorliegende Erfindung betrifft ein Katalysatorsystem, enthaltend
A) mindestens ein calciniertes Hydrotalcit,
B) mindestens eine Organoübergangsmetallverbindung,
C) optional eine oder mehrere kationenbildende Verbindung und
D) mindestens eine Organomagnesiumverbindung.

Außerdem betrifft die Erfindung die Verwendung des Katalysatorsystems zur Polymerisation oder Copolymerisation von Olefinen und ein Verfahren zur Herstellung von Polyolefinen durch Polymerisation oder Copolymerisation von Olefinen in Gegenwart des Katalysatorsystems.

Organoübergangsmetallverbindungen wie Metallocenkomplexe sind als Katalysatoren für die Olefinpolymerisation von großem Interesse, weil sich mit ihnen Polyolefine synthetisieren lassen, die mit herkömmlichen Ziegler-Natta-Katalysatoren nicht zugänglich sind. Beispielsweise führen solche Single-Site-Katalysatoren zu Polymeren mit einer engen Molmassenverteilung und einem einheitlichen Comonomereinbau. Damit diese bei Polymerisationsverfahren in der Gasphase oder in Suspension erfolgreich eingesetzt werden können, ist es oftmals von Vorteil, daß die Metallocene in Form eines Feststoffs eingesetzt werden, d. h. daß sie auf einen festen Träger aufgebracht werden. Weiterhin weisen die geträgerten Katalysatoren eine hohe Produktivität auf.

Als feste Trägermaterialien für Katalysatoren für die Olefinpolymerisation werden häufig Kieselgele verwendet, da sich aus diesem Material Partikel herstellen lassen, die in ihrer Größe und Struktur als Träger für die Olefinpolymerisation geeignet sind. Besonders bewährt haben sich dabei sprühgetrocknete Kieselgele, bei denen es sich um sphärische Agglomerate aus kleineren granulären Partikel, den sogenannten Primärpartikeln, handelt

Die Verwendung von Kieselgelen als Trägermaterial hat sich bei einigen Anwendungen jedoch als nachteilig herausgestellt. Bei der Herstellung von Folienprodukten kann es zur Bildung von Stippen kommen, die durch im Polymer verbleibende Kieselgelpartikel verursacht werden. Problematisch ist auch die Herstellung von Faserprodukten. Hierbei wird üblicherweise vor dem Verspinnen eine Schmelzefiltration durchgeführt. Enthalten die Polymerisate zu große Mengen an partikulären Katalysatorrückständen, kann sich an der Siebplatte ein Überdruck aufbauen. Dieser führt zu erheblichen prozesstechnischen Schwierigkeiten wie verkürzten Filterstandzeiten. Analytisch können partikuläre Katalysatorrückstände auch dadurch erfaßt werden, daß man lichtmikroskopisch Schmelzepräparate der kleinsten Siebfraktion eines gesiebten Polymers, in der sich die Verunreinigung augenfällig anreichern, untersucht.

Hydrotalcite sind anorganische Materialien, aus denen sich ebenfalls Partikel in Größen und mit Morphologien herstellen lassen, die sie als Träger für die Herstellung von Katalysatoren für die Olefinpolymerisation geeignet erscheinen lassen. Durch nachfolgende Calcinierung kann u.a. der gewünschte Gehalt an Hydroxylgruppen eingestellt werden. Weiterhin verändert sich auch die Struktur des Kristallaufbaus.

In der kanadischen Patentanmeldung CA-A 2 237 231 ist eine heterogene Olefinpolymerisationskatalysator-Zusammensetzung beschrieben, umfassend einen organometallischen Komplex eines Metalls der Gruppen 3 bis 10 des Periodensystems der Elemente mit mindestens einem Liganden vom Cyclopentadienyl-Typ, einen Aktivator und ein Hydrotalcit, wobei die Katalysatorzusammensetzung durch Sprühtrocknung einer Mischung der Komponenten hergestellt wird.

Aus WO 90/13533 ist bekannt, daß calcinierte Hydrotalcite als Katalysatoren für die Ethoxylierung bzw. Propoxylierung von Fettsäureestern wirken. Weiterhin ist aus DE-A 21 63 851 bekannt, daß calcinierte Hydrotalcite, die nach der Calcinierung halogeniert wurden, sich als Trägermaterialien für Ziegler-Natta-Katalysatoren zur Olefinpolymerisation eignen.

Der Erfindung lag somit die Aufgabe zugrunde, ein Katalysatorsystem zur Verfügung zu stellen, mit dem keine oder sehr wenige störende partikuläre Katalysatorrückstände im Polymerisat verbleiben, der mit einer hohen Katalysatoraktivität in Polymerisationsverfahren eingesetzt werden kann und mit dem eine einfache Aufarbeitung der Polymerisate nach der Polymerisation möglich ist

Demgemäß wurde ein Katalysatorsystem zur Olefinpolymerisation, enthaltend
A) mindestens ein calciniertes Hydrotalcit,
B) mindestens eine Organoübergangsmetallverbindung,
C) optional eine oder mehrere kationenbildende Verbindung und
D) mindestens eine Organomagnesiumverbindung
gefunden.

Weiterhin wurden die Verwendung des Katalysatorsystems zur Polymerisation oder Copolymerisation von Olefinen und ein Verfahren zur Herstellung von Polyolefinen durch Polymerisation oder Copolymerisation von Olefinen in Gegenwart des Katalysatorsystems gefunden.

Die erfindungsgemäßen Katalysatorsysteme eignen sich zur Polymerisation von Olefinen und vor allem zur Polymerisation von α-Olefinen, d.h. Kohlenwasserstoffen mit endständigen Doppelbindungen. Geeignete Monomere können funktionalisierte olefinisch ungesättigte Verbindungen wie Ester- oder Amidderivate der Acryl- oder Methacrylsäure, beispielsweise Acrylate, Methacrylate oder Acrylnitril sein. Bevorzugt sind unpolare olefinische Verbindungen, worunter auch arylsubstituierte α-Olefine fallen. Besonders bevorzugte α-Olefine sind lineare oder verzweigte C₂-C₁₂-1-Alkene, insbesondere lineare C₂-C₁₀-1-Alkene wie Ethylen, Propylen, 1-Buten, 1-Penten, 1-Hexen, 1-Hepten, 1-Octen, 1-Decen oder verzweigte C₂-C₁₀-1-Alkene wie 4-Methyl-1-penten, konjugierte und nicht konjugierte Diene wie 1,3-Butadien, 1,4-Hexadien, oder 1,7-Octadien oder vinylaromatische Verbindungen wie Styrol oder substituiertes Styrol. Es können auch Gemische aus verschiedenen α-Olefinen polymerisiert werden.

Geeignete Olefine sind auch solche, bei denen die Doppelbindung Teil einer cyclischen Struktur ist, die ein oder mehrere Ringsysteme aufweisen kann. Beispiele hierfür sind Cyclopenten, Norbornen, Tetracyclododecen oder Methylnorbornen oder Diene wie 5-Ethyliden-2-norbomen, Norbomadien oder Ethylnorbornadien.,

Es können auch Gemische aus zwei oder mehreren Olefinen polymerisiert werden. Insbesondere lassen sich die erfindungsgemäßen Katalysatorsysteme zur Polymerisation oder Copolymerisation von Ethylen oder Propylen einsetzen. Als Comonomere bei der Ethylenpolymerisation werden bevorzugt C₃-C₈-α-Olefine, insbesondere 1-Buten, 1-Penten, 1-Hexen und/oder 1-Octen verwendet. Bevorzugte Comonomere bei der Propylenpolymerisation sind Ethylen und/oder Buten.

Die erfindungsgemäßen Katalysatorsysteme enthalten mindestens ein calciniertes Hydrotalcit.

In der Mineralogie wird als Hydrotalcit ein natürliches Mineral mit der Idealformel

Mg₆Al₂(OH)₁₆CO₃ · 4 H₂O

bezeichnet, dessen Struktur sich von derjenigen des Brucits Mg(OH)₂ ableitet. Brucit kristallisiert in einer Schichtstruktur mit den Metallionen in Oktaederlücken zwischen zwei Schichten aus dichtgepackten Hydroxylionen, wobei nur jede zweite Schicht der Oktaederlücken besetzt ist Im Hydrotalcit sind einige Magnesiumionen durch Aluminiumionen ersetzt, wodurch das Schichtpaket eine positive Ladung erhält Diese wird durch die Anionen ausgeglichen, die sich zusammen mit Kristallwasser in den Zwischenschichten befinden.

Entsprechende Schichtstrukturen finden sich nicht nur bei Magnesium-Aluminium-Hydroxiden, sondern allgemein bei schichtförmig aufgebauten, gemischten Metallhydroxiden der allgemeinen Formel

M(II)₂ₓ²⁺M(III)₂³⁺(OH)₄ₓ₊₄·A_{2/n}ⁿ⁻·z H₂O

in der M(II) ein zweiwertiges Metall wie Mg, Zn, Cu, Ni, Co, Mn, Ca und/oder Fe und M(III) ein dreiwertiges Metall wie Al, Fe, Co, Mn, La, Ce und/oder Cr ist, x für Zahlen von 0,5 bis 10 in 0,5 Schritten, A für ein interstitielles Anion und n für die Ladung des interstitiellen Anions steht, die von 1 bis 8, üblicherweise von 1 bis 4 betragen kann und z eine ganze Zahl von 1 bis 6, insbesondere von 2 bis 4 bedeutet. Als interstitielle Anionen kommen organische Anionen wie Alkoholatanionen, Alkylethersulfate, Arytethersulfate oder Glykolethersulfate, anorganische Anionen wie insbesondere Carbonat, Hydrogencarbonat, Nitrat, Chlorid, Sulfat oder B(OH)₄⁻ oder Polyoxometallanionen wie Mo₇O₂₄⁶⁻ oder V₁₀O₂₈⁶⁻ in Betracht. Es kann sich jedoch auch um eine Mischung mehrerer solcher Anionen handeln.

Dementsprechend sollen alle derartigen schichtförmig aufgebauten, gemischten Metallhydroxide als Hydrotalcite im Sinne der vorliegenden Erfindung verstanden werden.

In der Regel werden geeignete Hydrotalcite synthetisch hergestellt. Eine Möglichkeit hierzu besteht darin, Salze der Metalle in Lösung zu bringen und unter definierten Bedingungen miteinander zu vermengen. Das in der WO 96/23727 beschriebene Verfahren, Alkoholate der zwei- und dreiwertigen Metalle zu vermischen und die Gemische mit Wasser zu hydrolisieren, ist erfindungsgemäß bevorzugt.

Aus Hydrotalciten lassen sich durch Calcinieren, d.h. Erwärmen, die sogenannten calcinierten Hydrotalcite herstellen. Die Herstellung der erfindungsgemäß eingesetzten calcinierten Hydrotalcite erfolgt üblicherweise bei Temperaturen oberhalb von 180°C. Bevorzugt ist eine Calcinierung für eine Zeitdauer von 3 bis 24 Stunden bei Temperaturen von 250°C bis 1000°C und insbesondere von 400°C bis 700°C. Gleichzeitiges Überleiten von Luft oder Inertgas oder Anlegen von Vakuum ist möglich.

Beim Erhitzen geben die natürlichen oder synthetischen Hydrotalcite zunächst Wasser ab, d.h. es erfolgt eine Trocknung. Beim weiteren Erhitzen, dem eigentlichen Calcinieren, wandeln sich die Metallhydroxide unter Abspaltung von Hydroxylgruppen und interstitiellen Anionen in die Metalloxide um, wobei auch in den calcinierten Hydrotalciten noch OH-Gruppen oder interstitielle Anionen wie Carbonat enthalten sein können. Ein Maß hierfür ist der Glühverlust. Dieser ist der Gewichtsverlust, den eine Probe erleidet, die in zwei Schritten zunächst für 30 min bei 200°C in einem Trockenschrank und dann für 1 Stunde bei 950°C in einem Muffelofen erhitzt wird.

Bei den erfindungsgemäß als Komponente A) eingesetzten calcinierten Hydrotalciten handelt es sich somit um Mischoxide der zwei- und dreiwertigen Metalle M(II) und M(III), wobei das molare Verhältnis von M(II) zu M(III) in der Regel im Bereich von 0,5 bis 10, bevorzugt von 0,75 bis 8 und insbesondere von 1 bis 4 liegt. Weiterhin können noch übliche Mengen an Verunreinigungen, beispielsweise an Si, Fe, Na, Ca oder Ti enthalten sein.

Bevorzugte calcinierte Hydrotalcite A) sind Mischoxide, bei denen M(II) Magnesium und M(III) Aluminium ist Entsprechende Aluminium-Magnesium-Mischoxide sind von der Fa. Condea Chemie GmbH, Hamburg unter dem Handelsnamen Puralox Mg erhältlich.

Bei den erfindungsgemäß eingesetzten calcinierten Hydrotalciten muß die Abspaltung von Hydroxylgruppe und interstitiellen Anionen bzw. die Umwandlung in die Metalloxide nicht vollständig sein. D.h. auch teil-calcinierte Hydrotalcite lassen sich zur Herstellung der erfindungsgemäßen Katalysatorfeststoffe einsetzen. Bevorzugt sind calcinierte Hydrotalcite, in denen die strukturelle Umwandlung nahezu oder vollständig abgeschlossen ist. Eine Calcinierung, d.h. eine Umwandlung der Struktur läßt sich beispielsweise anhand von Röntgendiffraktogrammen feststellen.

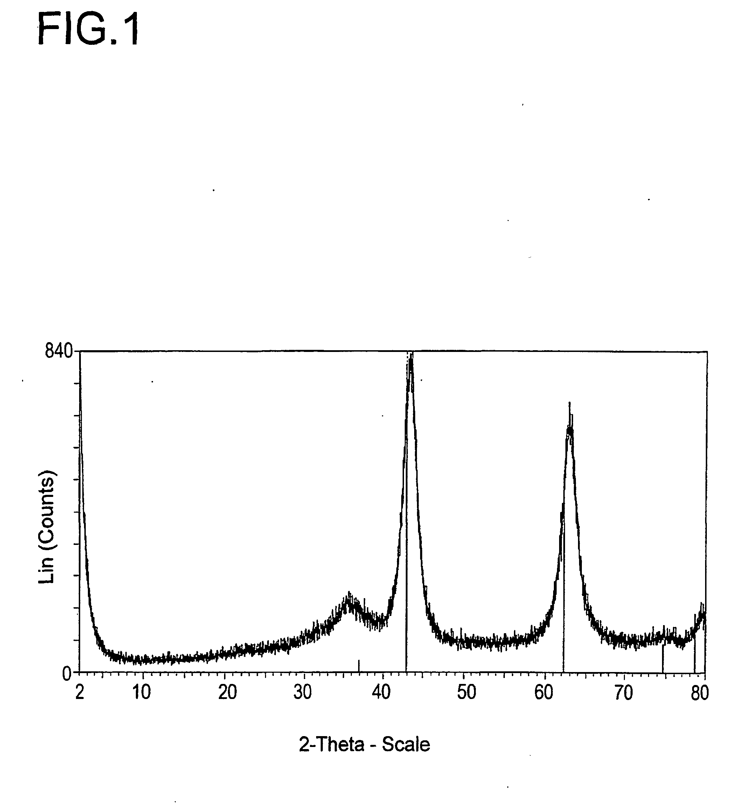

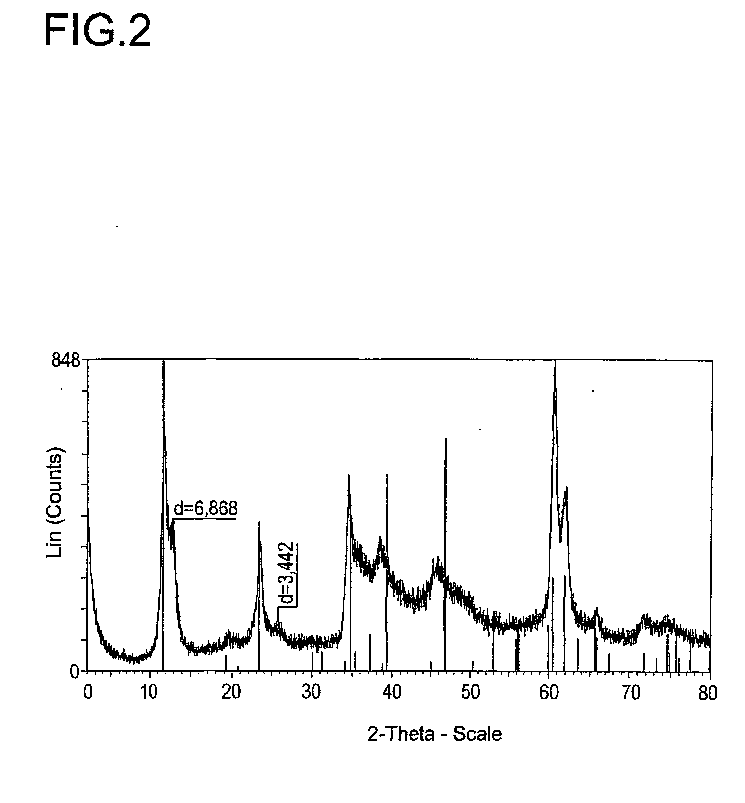

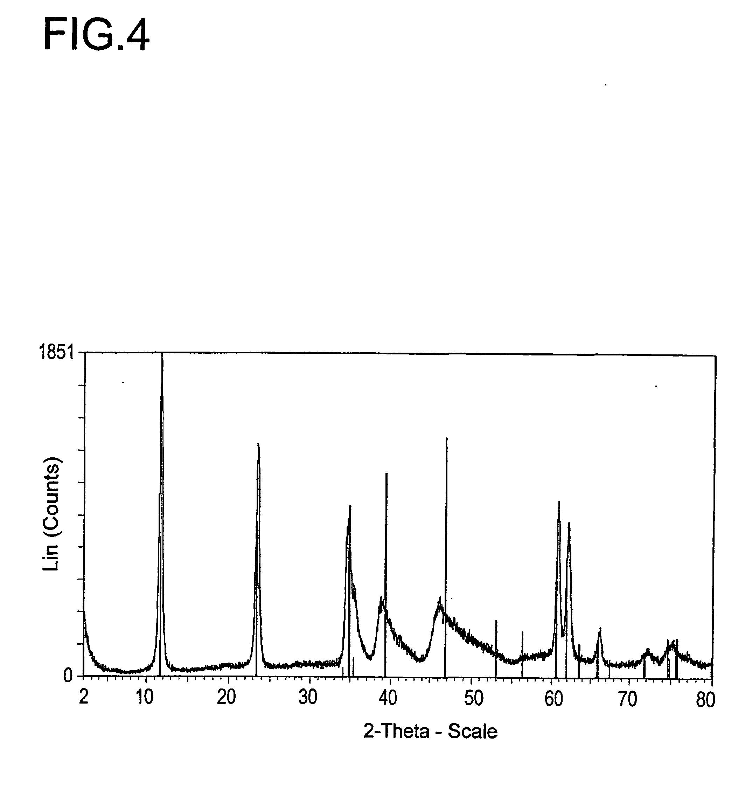

In einem Pulverdiffraktometer D 5000 der Firma Siemens wurden Aluminium-Magnesium-Mischoxide nach unterschiedlichen Calcinierungszeiten gemessen (in Reflexion mit Cu-Kα-Strahlung). Fig. 1 zeigt ein Röntgendiffraktogramm eines calcinierten Aluminium-Magnesium-Mischoxids. Dieses zeichnet sich durch Spitzen in der 2-Theta-Skala bei 35 - 37°, 43 - 45°und 62 - 64° aus. Fig. 4 stellt das Röntgendiffraktogramm des Ausgangsmaterials dar, wobei insbesondere Spitzen bei 11 - 14° und 22 - 25° zu beobachten sind. In Fig. 2 ist ein Röntgendiffraktogramm eines teilcalcinierten, erfindungsgemässen Trägermaterials abgebildet. Dieses wurde ebenfalls aus dem in Fig. 4 gezeigten Ausgangsmaterial erhalten. Es sind sowohl die Spitzen des Ausgangsmaterials als auch die eines calcinierten Aluminium-Magnesium-Mischoxids zu erkennen. Dennoch unterscheidet sich das Röntgendiffraktogramm signifikant von dem des nicht calcinierten Ausgangsmaterials.

Die erfindungsgemäß eingesetzten calcinierten Hydrotalcite werden in der Regel als feinteilige Pulver mit einem mittleren Teilchendurchmesser D50 von 5 bis 200 µm, vorzugsweise von 10 bis 150 µm, besonders bevorzugt von 15 bis 100 µm und insbesondere von 20 bis 70 µm eingesetzt.

Die teilchenförmigen calcinierten Hydrotalcite weisen üblicherweise Porenvolumina von 0,1 bis 10 cm³/g, bevorzugt von 0,2 bis 4 cm³/g, und spezifische Oberflächen von 30 bis 1000 m²/g, bevorzugt von 50 bis 500 m²/g und insbesondere von 100 bis 300 m²/g auf. Das erfindungsgemäße Trägermaterial kann zusätzlich auch chemisch behandelt werden, wobei übliche Trocknungsmittel wie Metallalkyle zum Einsatz kommen können. Entsprechende Behandlungsmethoden werden z.B. in WO 00/31090 beschrieben. Eine Chlorierung des Trägermaterials z.B. mit Phosgen sollte vermieden werden.

Als Organoübergangsmetallverbindung B) kommen prinzipiell alle organische Gruppen enthaltenden Verbindungen der Übergangsmetalle der 3. bis 12. Gruppe des Periodensystems oder der Lanthaniden in Betracht, die bevorzugt nach Reaktion mit den Komponenten C), in Anwesenheit von D) und optional E) für die Olefinpolymerisation aktive Katalysatoren bilden. Üblicherweise handelt es sich hierbei um Verbindungen, bei denen mindestens ein ein- oder mehrzähniger Ligand über Sigma- oder Pi-Bindung an das Zentralatom gebunden ist Als Liganden kommen sowohl solche in Betracht, die Cyclopentadienylreste enthalten, als auch solche, die frei von Cyclopentadienylresten sind. In Chem. Rev. 2000, Vol. 100, Nr. 4 wird eine Vielzahl solcher für die Olefinpolymerisation geeigneter Verbindungen B) beschrieben. Weiterhin sind auch mehrkemige Cyclopentadienylkomplexe für die Olefinpolymerisation geeignet.

Geeignete Verbindungen B) sind zum Beispiel Übergangsmetallkomplexe mit mindestens einem Liganden der allgemeinen Formeln F-I bis F-V, 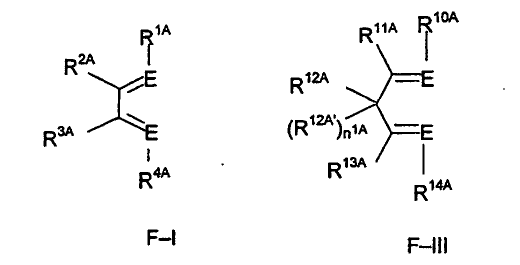 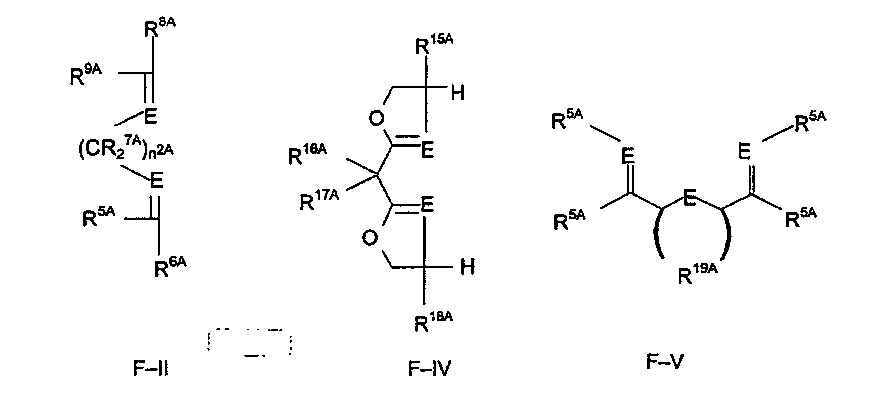 wobei das Übergangsmetall ausgewählt ist aus den Elementen Ti, Zr, Hf, Sc, V, Nb, Ta, Cr, Mo, W, Fe, Co, Ni, Pd, Pt oder ein Element der Seltenerd-Metalle. Bevorzugt sind hierbei Verbindungen mit Nickel, Eisen, Kobalt und Palladium als Zentralmetall.

E ist ein Element der 15. Gruppe des Periodensystems der Elemente bevorzugt N oder P, wobei N besonders bevorzugt ist. Die zwei oder drei Atome E in einem Molekül können dabei gleich oder verschieden sein.

Die Reste R^{1A} bis R^{19A}, die innerhalb eines Ligandsystems F-I bis F-V gleich oder verschieden sein können, stehen dabei für folgende Gruppen:
- R^{1A} und R^{4A}: unabhängig voneinander für Kohlenwasserstoff- oder substituierte Kohlenwasserstoffreste, bevorzugt sind dabei Kohlenwasserstoffreste bei denen das dem Element E benachbarte Kohlenstoffatom mindestens mit zwei Kohlenstoffatomen verbunden ist,
- R^{2A} und R^{3A}: unabhängig voneinander für Wasserstoff, Kohlenwasserstoff- oder substituierte Kohlenwasserstoffreste, wobei R^{2A} und R^{3A} auch zusammen ein Ringsystem bilden können, in dem auch ein oder mehrere Heteroatome vorhanden sein können,
- R^{6A} und R^{8A}: unabhängig voneinander für Kohlenwasserstoff- oder substituierte Kohlenwasserstoffreste,
- R^{5A} und R^{9A}: unabhängig voneinander für Wasserstoff, Kohlenwasserstoff- oder substituierte Kohlenwasserstoffreste,
wobei R^{6A} und R^{5A} bzw. R^{8A} und R^{9A} auch zusammen ein Ringsystem bilden können,
- R^{7A}: unabhängig voneinander für Wasserstoff, Kohlenwasserstoff- oder substituierte Kohlenwasserstoffreste, wobei zwei R^{7A} auch zusammen ein Ringsystem bilden können,
- R^{10A} und R^{14A}: unabhängig voneinander für Kohlenwasserstoff- oder substituierte Kohlenwasserstoffreste,
- R^{11A}, R^{12A}, R^{12A'} und R^{13A}: unabhängig voneinander für Wasserstoff, Kohlenwasserstoff oder substituierte Kohlenwasserstoffreste, wobei auch zwei oder mehr geminale oder vicinale Reste R^{11A}, R^{12A}, R^{12A'} und R^{13A} zusammen ein Ringsystem bilden können,
- R^{15A} und R^{18A}: unabhängig voneinander für Wasserstoff, Kohlenwasserstoff- oder substituierte Kohlenwasserstoffreste,
- R^{16A} und R^{17A}: unabhängig voneinander für Wasserstoff, Kohlenwasserstoff- oder substituierte Kohlenwasserstoffreste,
- R^{19A}: für einen organischer Rest, der ein 5- bis 7-gliedriges substituiertes oder unsubstituiertes, insbesondere ungesättigtes oder aromatisches heterocyclisches Ringsystem bildet, insbesondere zusammen mit E ein Pyridin-System,
- n^{1A}: für 0 oder 1, wobei F-III für n^{1A} gleich 0 negativ geladen ist und
- n^{2A}: für eine ganze Zahl zwischen 1 und 4 bevorzugt 2 oder 3.

Besonders geeignete Übergangsmetallkomplexe mit Liganden der allgemeinen Formeln F-I bis F-IV sind beispielsweise Komplexe der Übergangsmetalle Fe, Co, Ni, Pd oder Pt mit Liganden der Formel F-I. Besonders bevorzugt sind Diiminkomplexe des Ni oder Pd, z.B.:
Di(2,6-di-i-propyl-phenyl)-2,3-dimethyl-diazabutadien-palladiumdichlorid
Di(di-i-propyl-phenyl)-2,3-dimethyl-diazabutadien-nickel-dichlorid
Di(2,6-di-i-propyl-phenyl)-dimethyl-diazabutadien-palladium-dimethyl
Di(2,6-di-i-propyl-phenyl)-2,3-dimethyl-diazabutadien-nickel-dimethyl
Di(2,6-dimethyl-phenyl)-2,3-dimethyl-diazabutadien-palladiumdichlorid
Di(2,6-dimethyl-phenyl)-2,3-dimethyl-diazabutadien-nickel-dichlorid
Di(2,6-dimethyl-phenyl)-2,3-dimethyl-diazabutadien-palladium-dimethyl
Di(2,6-dimethyl-phenyl)-2,3-dimethyl-diazabutadien-nickel-dimethyl
Di(2-methyl-phenyl)-2,3-dimethyl-diazabutadien-palladium-dichlorid
Di(2-methyl-phenyl)-2,3-dimethyl-diazabutadien-nickel-dichlorid
Di(2-methyl-phenyl)-2,3-dimethyl-diazabutadien-palladium-dimethyl
Di(2-methyl-phenyl)-2,3-dimethyl-diazabutadien-nickel-dimethyl
Diphenyl-2,3-dimethyl-diazabutadien-palladium-dichlorid
Diphenyl-2,3-dimethyl-diazabutadien-nickel-dichlorid
Diphenyl-2,3-dimethyl-diazabutadien-palladium-dimethyl
Diphenyl-2,3-dimethyl-diazabutadien-nickel-dimethyl
Di(2,6-dimethyl-phenyl)-azanaphten-palladium-dichlorid
Di(2,6-dimethyl-phenyl)-azanaphten-nickel-dichlorid
Di(2,6-dimethyl-phenyl)-azanaphten-palladium-dimethyl
Di(2,6-dimethyl-phenyl)-azanaphten-nickel-dimethyl
1,1'-Dipyridyl-palladium-dichlorid
1,1'-Dipyridyl-nickel-dichlorid
1,1'-Dipyridyl-palladium-dimethyl
1,1'-Dipyridyl-nickel-dimethyl

Besonders geeignete Verbindungen F-V sind solche, die in J. Am. Chem. Soc. 120, S. 4049 ff. (1998), J. Chem. Soc., Chem. Commun. 1998, 849 beschrieben sind. Als bevorzugte Komplexe mit Liganden F-V lassen sich 2,6-bis(imino)pyridyl-Komplexe der Übergangsmetalle Fe, Co, Ni, Pd oder Pt, insbesondere Fe einsetzen.

Als Organoübergangsmetallverbindungen B) können auch Iminophenolat-Komplexe verwendet werden, wobei die Liganden beispielsweise ausgehend von substituierten oder unsubstituierten Salicylaldehyden und primären Aminen, insbesondere substituierten oder unsubstituierten Arylaminen, hergestellt werden. Auch Übergangsmetallkomplexe mit Pi-Liganden, die im Pi-System ein oder mehrere Heteroatome enthalten, wie beispielsweise der Boratabenzolligand, das Pyrrolylanion oder das Phospholylanion, lassen sich als Organoübergangsmetallverbindungen B) einsetzten.

Besonders gut geeignete Organoübergangsmetallverbindungen B) sind solche mit mindestens einem Cyclopentadienyltyp-Liganden, die gemeinhin als Metallocenkomplexe bezeichnet werden. Hierbei eignen sich besonders Metallocenkomplexe der allgemeinen Formel (I) 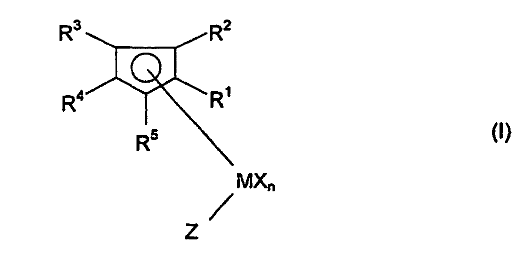 in der die Substituenten und Indizes folgende Bedeutung haben:
- M: Titan, Zirkonium, Hafnium, Vanadium, Niob, Tantal, Chrom, Molybdän oder Wolfram, sowie Elemente der 3. Gruppe des Periodensystems und der Lanthaniden,
- X: Fluor, Chlor, Brom, Jod, Wasserstoff, C₁-C₁₀-Alkyl, C₂-C₁₀-Alkenyl, C₆-C₁₅-Aryl, Alkylaryl mit 1 bis 10 C-Atomen im Alkylrest und 6 bis 20 C-Atomen im Arylrest, -OR⁶ oder -NR⁶R⁷, oder zwei Reste X für einen substituierten oder unsubstituierten Dienliganden, insbesondere einen 1,3-Dienliganden, stehen, und
- n: 1, 2 oder 3 ist, wobei n entsprechend der Wertigkeit von M den Wert aufweist, bei dem der Metallocenkomplex der allgemeinen Formel (I) ungeladen vorliegt,
wobei
- R⁶ und R⁷: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind und gegebenenfalls miteinander verbunden sind,
- R¹ bis R⁵: Wasserstoff, C₁-C₂₂-Alkyl, 5- bis 7-gliedriges Cycloalkyl oder Cycloalkenyl, die ihrererseits durch C₁-C₁₀-Alkyl substituiert sein können, C₂-C₂₂-Alkenyl, C₆-C₂₂-Aryl, Alkylaryl oder Arylalkyl, wobei auch zwei benachbarte Reste gemeinsam für 4 bis 44 C-Atome aufweisende gesättigte oder ungesättigte cyclische Gruppen stehen können, oder Si(R⁸)₃ mit
- R⁸: gleich oder verschieden C₁-C₁₀-Alkyl, C₃-C₁₀-Cycloalkyl, C₆-C₁₅-Aryl, C₁-C₄-Alkoxy oder C₆-C₁₀-Aryloxy sein kann und
- Z: für X oder 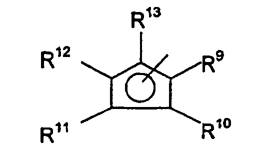 steht,
wobei die Reste
- R⁹ bis R¹³: Wasserstoff, C₁-C₂₂-Alkyl, 5- bis 7-gliedriges Cycloalkyl oder Cycloalkenyl, die ihrererseits durch C₁-C₁₀-Alkyl substituiert sein können, C₂-C₂₂-Alkenyl, C₆-C₂₂-Aryl, Alkylaryl oder Arylalkyl, wobei auch zwei benachbarte Reste gemeinsam für 4 bis 44 C-Atome aufweisende gesättigte oder ungesättigte cyclische Gruppen stehen können, oder Si(R¹⁴)₃ mit
- R¹⁴: gleich oder verschieden C₁-C₁₀-Alkyl, C₃-C₁₀-Cycloalkyl, C₆-C₁₅-Aryl, C₁C₄-Alkoxy oder C₆-C₁₀-Aryloxy bedeuten,
oder wobei die Reste R⁴ und Z gemeinsam eine Gruppierung -R¹⁵-A- bilden, in der
- R¹⁵: 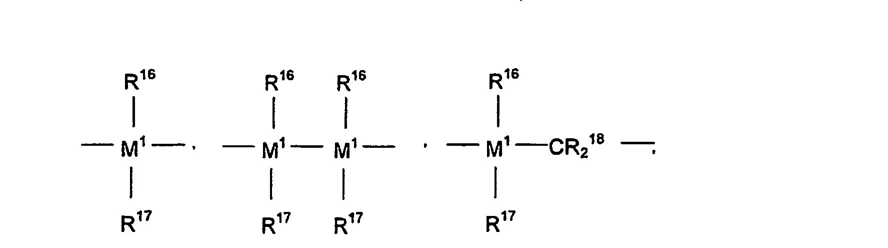 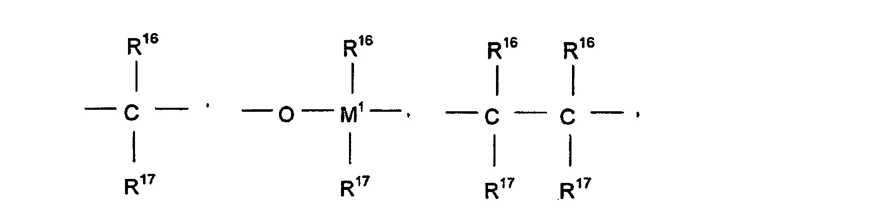 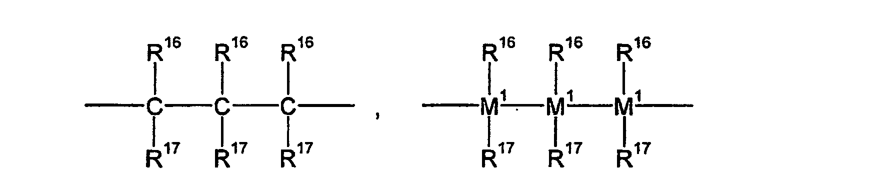 = BR¹⁶,= BNR¹⁶R¹⁷, = AlR¹⁶, -Ge-, -Sn-, -O-, -S-, = SO, = SO₂, = NR¹⁶, = CO, = PR¹⁶ oder = P(O)R¹⁶ ist,
wobei
- R¹⁶, R¹⁷ und R¹⁸: gleich oder verschieden sind und jeweils ein Wasserstoffatom, ein Halogenatom, eine Trimethylsilylgruppe, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₇-C₁₅-Alkylaryloxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
- M¹: Silicium, Germanium oder Zinn ist,
- A: 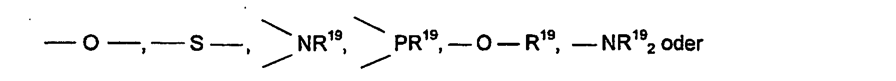 ―PR¹⁹₂ bedeuten, mit
- R¹⁹: unabhängig voneinander C₁-C₁₀-Alkyl, C₆-C₁₅-Aryl, C₃-C₁₀-Cycloalkyl, C₇-C₁₈-Alkylaryl oder Si(R²⁰)₃,
- R²⁰: Wasserstoff, C₁-C₁₀-Alkyl, C₆-C₁₅-Aryl, das seinerseits mit C₁-C₄-Alkylgruppen substituiert sein kann oder C₃-C₁₀-Cycloalkyl
oder wobei die Reste R⁴ und R¹² gemeinsam eine Gruppierung -R¹⁵- bilden.

Bevorzugt sind die Reste X in der allgemeinen Formel (I) gleich, bevorzugt Fluor, Chlor, Brom, C₁ bis C₇-Alkyl, oder Aralkyl, insbesondere Chlor, Methyl oder Benzyl.

Von den Metallocenkomplexen der allgemeinen Formel (I) sind 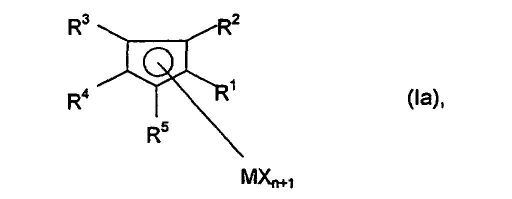 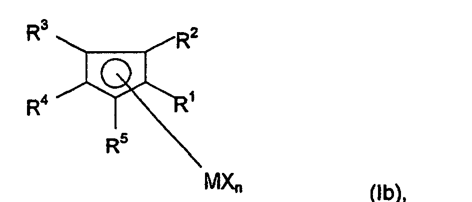 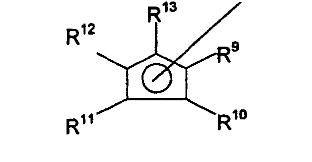 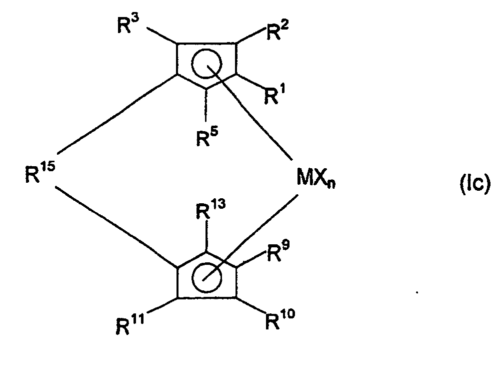 und 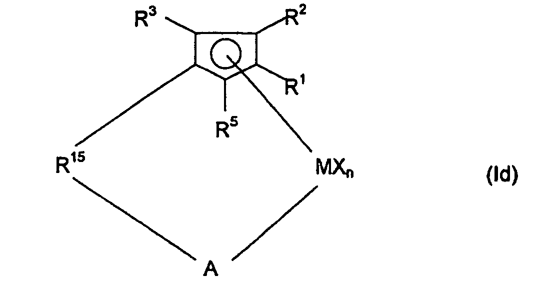 bevorzugt.

Von den Verbindungen der Formel (Ia) sind insbesondere diejenigen bevorzugt, in denen
- M: Titan, Zirkonium oder Hafnium,
- X: Chlor, C₁-C₄-Alkyl, Phenyl, Alkoxy oder Aryloxy
- n: die Zahl 1 oder 2 und
- R¹ bis R⁵: Wasserstoff oder C₁-C₄-Alkyl bedeuten.

Von den Verbindungen der Formel (Ib) sind als bevorzugt diejenigen zu nennen, bei denen
- M: für Titan, Zirkonium oder Hafnium steht,
- X: Chlor, C₁-C₄-Alkyl oder Benzyl bedeuten, oder zwei Reste X für einen substituierten oder unsubstituierten Butadienliganden stehen,
- n: die Zahl 2,
- R¹ bis R⁵: Wasserstoff, C₁-C₄-Alkyl oder Si(R⁸)₃ und
- R⁹ bis R¹³: Wasserstoff, C₁-C₄-Alkyl oder Si(R¹⁴)₃
oder jeweils zwei Reste R¹ bis R⁵ und/oder R⁹ bis R¹³ zusammen mit dem C₅-Ring ein Indenyloder substituiertes Indenyl-System bedeuten.

Insbesondere sind die Verbindungen der Formel (Ib) geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)zirkoniumdichlorid,
Bis(methylcyclopentadienyl)zirkoniumdichlorid,
Bis(ethylcyclopentadienyl)zirkoniumdichlorid,
Bis(n-butylcyclopentadienyl)zirkoniumdichlorid,
Bis(1-n-butyl-3-methylcyclopentadienyl)zirkoniumdichlorid,
Bis(indenyl)zirkoniumdichlorid,
Bis(tetrahydroindenyl)zirkoniumdichlorid und
Bis(trimethylsilylcyclopentadienyl)zirkoniumdichlorid
sowie die entsprechenden Dimethylzirkoniumverbindungen.

Von den Verbindungen der Formel (Ic) sind diejenigen besonders geeignet, in denen
- R¹ und R⁹: gleich oder verschieden sind und für Wasserstoff oder C₁-C₁₀-Alkylgruppen stehen,
- R⁵ und R¹³: gleich oder verschieden sind und für Wasserstoff, eine Methyl-, Ethyl-, iso-Propyl- oder tert.-Butylgruppe stehen,
- R³ und R¹¹: C₁-C₄-Alkyl und
- R² und R¹⁰: Wasserstoff bedeuten
oder
zwei benachbarte Reste R² und R³ sowie R¹⁰ und R¹¹ gemeinsam für 4 bis 44 C-Atome aufweisende gesättigte oder ungesättigte cyclische Gruppen stehen,
- R¹⁵: für 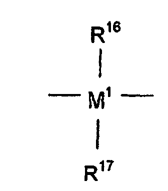 oder 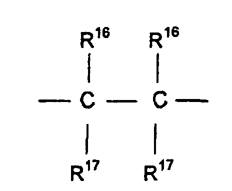 steht,
oder = BR¹⁶ oder = BNR¹⁶R¹⁷ bedeuten,
- M: für Titan, Zirkonium oder Hafnium und
- X: gleich oder verschieden für Chlor, C₁-C₄-Alkyl, Benzyl, Phenyl oder C₇-C₁₅-Alkylaryloxy stehen.

Insbesondere geeignete Verbindungen der Formel (Ic) sind solche der Formel (Ic') 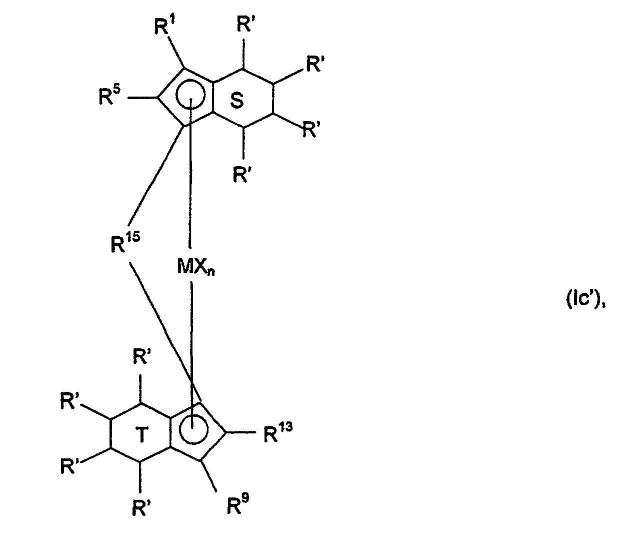 in der
die Reste R' gleich oder verschieden sind und Wasserstoff, C₁-C₁₀-Alkyl oder C₃-C₁₀-Cycloalkyl, bevorzugt Methyl, Ethyl, Isopropyl oder Cyclohexyl, C₆-C₂₀-Aryl, bevorzugt Phenyl, Naphthyl oder Mesityl, C₇-C₄₀-Arylalkyl, C₇-C₄₀-Alkylaryl, bevorzugt 4-tert.-Butylphenyl oder 3,5-Di-tertbutylphenyl, oder C₈-C₄₀-Arylalkenyl bedeuten,

R⁵ und R¹³ gleich oder verschieden sind und für Wasserstoff, C₁-C₆-Alkyl, bevorzugt Methyl, Ethyl, Isopropyl, n-Propyl, n-Butyl, n-Hexyl oder tert.-Butyl, stehen,
und die Ringe S und T gleich oder verschieden, gesättigt, ungesättigt oder teilweise gesättigt sind.

Die Indenyl- bzw. Tetrahydroindenylliganden der Metallocene der Formel (Ic') sind bevorzugt in 2-, 2,4-, 4,7-, 2,4,7-, 2,6-, 2,4,6-, 2,5,6-, 2,4,5,6- oder 2,4,5,6,7-Stellung, insbesondere in 2,4-Stellung substituiert, wobei für den Substitutionsort die folgende Nomenklatur gilt

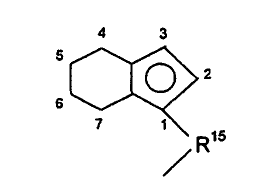

Als Komplexverbindungen (Ic') werden bevorzugt verbrückte Bis-Indenyl-Komplexe in der Racoder Pseudo-Rac-Form eingesetzt, wobei es sich bei der pseudo-Rac-Form um solche Komplexe handelt, bei denen die beiden Indenyl-Liganden ohne Berücksichtigung aller anderen Substituenten des Komplexes relativ zueinander in der Rac-Anordnung stehen.

Beispiele für besonders geeignete Komplexverbindungen (Ic) und (Ic') sind u.a.
Dimethylsilandiylbis(cyclopentadienyl)zirkoniumdichlorid,
Dimethylsilandiylbis(indenyl)zirkoniumdichlorid,
Dimethylsilandiylbis(tetrahydroindenyl)zirkoniumdichlorid,
Ethylenbis(cyclopentadienyl)zirkoniumdichlorid,
Ethylenbis(indenyl)zirkoniumdichlorid,
Ethylenbis(tetrahydroindenyl)zirkoniumdichlorid,
Tetramethylethylen-9-fluorenylcyclopentadienylzirkoniumdichlorid,
Dimethylsilandiylbis(3-tert.butyl-5-methylcyclopentadienyl)-zirkoniumdichlorid,
Dimethylsilandiylbis(3-tert.butyl-5-ethylcyclopentadienyl)-zirkoniumdichlorid,
Dimethylsilandiylbis(2-methylindenyl)zirkoniumdichlorid,
Dimethylsilandiylbis(2-isopropylindenyl)zirkoniumdichlorid,
Dimethylsilandiylbis(2-tert.butylindenyl)zirkoniumdichlorid,
Diethylsilandiylbis(2-methylindenyl)zirkoniumdibromid,
Dimethylsilandiylbis(3-methyl-5-methylcyclopentadienyl)-zirkoniumdichlorid,
Dimethylsilandiylbis(3-ethyl-5-isopropylcyclopentadienyl)-zirkoniumdichlorid,
Dimethylsilandiylbis(2-ethylindenyl)zirkoniumdichlorid,
Dimethylsilandiylbis(2-methyl-4,5-benzindenyl)zirkoniumdichlorid
Dimethylsilandiylbis(2-ethyl-4,5-benzindenyl)zirkoniumdichlorid
Methylphenylsilandiylbis(2-methyl-4,5-benzindenyl)-zirkoniumdichlorid,
Methylphenylsilandiylbis(2-ethyl-4,5-benzindenyl)-zirkoniumdichlorid,
Diphenylsilandiylbis(2-methyl-4,5-benzindenyl)zirkoniumdichlorid,
Diphenylsilandiylbis(2-ethyl-4,5-benzindenyl)zirkoniumdichlorid,
Diphenylsilandiylbis(2-methylindenyl)hafniumdichlorid,
Dimethylsilandiylbis(2-methyl-4-phenyl-indenyl)-zirkoniumdichlorid,
Dimethylsilandiylbis(2-ethyl-4-phenyl-indenyl)-zirkoniumdichlorid,
Dimethylsilandiylbis(2-methyl-4-(1-naphthyl)-indenyl)-zirkoniumdichlorid,
Dimethylsilandiylbis(2-ethyl-4-(1-naphthyl)-indenyl)-zirkoniumdichlorid,
Dimethylsilandiylbis(2-propyl-4-(1-naphthyl)-indenyl)-zirkoniumdichlorid,
Dimethylsilandiylbis(2-i-butyl-4-(1-naphthyl)-indenyl)-zirkoniumdichlorid,
Dimethylsilandiylbis(2-propyl-4-(9-phenanthryl)-indenyl)-zirkoniumdichlorid,
Dimethylsilandiylbis(2-methyl-4-isopropylindenyl)-zirkoniumdichlorid,
Dimethylsilandiylbis(2,7-dimethyl-4-isopropylindenyl)-zirkoniumdichlorid,
Dimethylsilandiylbis(2-methyl-4,6-diisopropylindenyl)-zirkoniumdichlorid,
Dimethylsilandiylbis(2-methyl-4[p-trifluormethylphenyl]indenyl)-zirkoniumdichlorid,
Dimethylsilandiylbis(2-methyl-4-[3',5'-dimethylphenyl]indenyl)-zirkoniumdichlorid,
Dimethylsilandiylbis(2-methyl-4-[4'-tert.butylphenyl]indenyl)-zirkoniumdichlorid,
Diethylsilandiylbis(2-methyl-4-[4'-tert.butylphenyl]indenyl)-zirkoniumdichlorid,
Dimethylsilandiylbis(2-ethyl-4-[4'-tert.butylphenyl]indenyl)-zirkoniumdichlorid,
Dimethylsilandiylbis(2-propyl-4-[4'-tert.butylphenyl]indenyl)-zirkoniumdichlorid,
Dimethylsilandiylbis(2-isopropyl-4-[4'-tert.butylphenyl]indenyl)-zirkoniumdichlorid,
Dimethylsilandiylbis(2-n-butyl-4-[4'-tert.butylphenyl]indenyl)-zirkoniumdichlorid,
Dimethylsilandiylbis(2-hexyl-4-[4'-tert.butylphenyl]indenyl)-zirkoniumdichlorid,
Dimethylsilandiyl(2-isopropyl-4-phenyl-indenyl)-(2-methyl-4-phenyl-indenyl)zirkoniumdichlorid,
Dimethylsilandiyl(2-isopropyl-4-(1-naphthyl)-indenyl)-(2-methyl-4-(1-naphthyl)-indenyl)zirkoniumdichlorid,
Dimethylsilandiyl(2-isopropyl-4-[4'-tert.butylphenyl]indenyl)-(2-methyl-4-[4'-tert.butylphenyl]indenyl)zirkoniumdichlorid,
Dimethylsilandiyl(2-isopropyl-4-[4'-tert.butylphenyl]indenyl)-(2-ethyl-4-[4'-tert.butylphenyl]indenyl)zirkoniumdichlorid,
Dimethylsilandiyl(2-isopropyl-4-[4'-tert.butylphenyl]indenyl)-(2-methyl-4-[3',5'-bis-tert.butylphenyl]indenyl)zirkonium-dichlorid
Dimethylsilandiyl(2-isopropyl-4-[4'-tert.butylphenyl]indenyl)-(2-methyl-4-[1'-naphthyl]indenyl)zirkoniumdichlorid
und Ethylen(2-isopropyl-4-[4'-tert.butylphenyl]indenyl)-(2-methyl-4-[4'-tert.butylphenyl]indenyl)zirkoniumdichloridsowie die entsprechenden Dimethyl-, Monochloromono(alkylaryloxy)- und Di-(alkylaryloxy)-zirkoniumverbindungen.

Bei den Verbindungen der allgemeinen Formel (Id) sind als besonders geeignet diejenigen zu nennen, in denen
- M: für Titan oder Zirkonium, insbesondere Titan,
- X: für Chlor, C₁-C₄-Alkyl oder Phenyl oder zwei Reste X für einen substituierten oder unsubstituierten Butadienliganden,
- R¹⁵: für 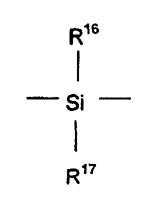 oder 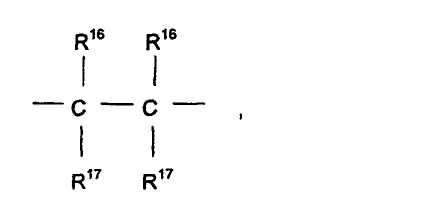
- A: für ―O―, ―S― 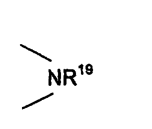
und
- R¹ bis R³ und R⁵: für Wasserstoff, C₁-C₁₀-Alkyl, bevorzugt Methyl, C₃-C₁₀-Cycloalkyl, C₆-C₁₅-Aryl oder Si(R⁸)₃ stehen, oder wobei zwei benachbarte Reste für 4 bis 12 C-Atome aufweisende cyclische Gruppen stehen, wobei besonders bevorzugt alle R¹ bis R³ und R⁵ Methyl sind.

Eine andere Gruppe von Verbindungen der Formel (Id), die besonders geeignet sind, die diejenigen in den
- M: für Titan oder Chrom, bevorzugt in der Oxidationsstufe III,
- X: für Chlor, C₁-C₄-Alkyl oder Phenyl, oder zwei Reste X für einen substituierten oder unsubstituierten Butadienliganden,
- R¹⁵: für 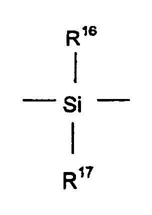 oder 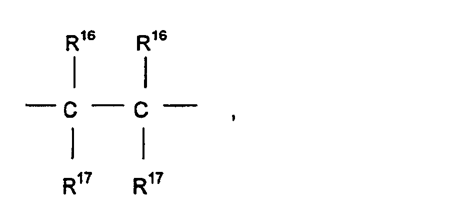
- A: für ―O ―R¹⁹, ―NR¹⁹₂, ―PR¹⁹₂ und
- R¹ bis R³ und R⁵: für Wasserstoff, C₁-C₁₀-Alkyl, C₃-C₁₀-Cycloalkyl, C₆-C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob, Tantal oder Chrom, bevorzugt ist.

Beispiele für entsprechende Herstellungsverfahren sind u.a. im Journal of Organometallic Chemistry, 369 (1989), 359-370 beschrieben.

Weitere geignete Organoübergangsmetallverbindungen B) sind Metallocene, mit mindestens einem Liganden, der aus einem Cyclopentadienyl oder Heterocyclopentadienyl mit einem ankondensierten Heterocyclus gebildet wird, wobei die Heterocyclen bevorzugt aromatisch sind und Stickstoff und/oder Schwefel enthalten. Derartige Verbindungen sind beispielsweise in der WO 98/22486 beschrieben. Dies sind insbesondere:
Dimethylsilandiyl-(2-methyl-4-phenyl-indenyl)-(2,5-dimethyl-N-phenyl-4-azapentalen)zirkoniumdichlorid,
Dimethylsilandiylbis(2-methyl-4-phenyl-4-hydroazulenyl)zirkonium-dichlorid, Dimethylsilandiylbis(2-ethyl-4-phenyl-4-hydroazulenyl)zirkonium-dichlorid,

Erfindungsgemäß geeignete Organoübergangsmetallverbindungen B) sind außerdem substituierte Monocyclopentadienyl-, Monoindenyl-, Monofluorenyl- oder Heterocyclopentadienylkomplexe von Chrom, Molybdän oder Wolfram, wobei mindestens einer der Substituenten am Cyclopentadienylring eine rigide, nicht nur ausschließlich Ober sp³ hybridisierte Kohlenstoff- oder Silicium Atome gebundene Donorfunktion trägt.

Die direkteste Verknüpfung zur Donorfunktion enthält dazu mindestens ein sp oder sp² hybridisiertes Kohlenstoffatom, bevorzugt ein bis drei sp² hybridisierte Kohlenstoffatome. Bevorzugt enthält die direkte Verknüpfung eine ungesättigte Doppelbindung, einen Aromaten oder bildet mit dem Donor ein partiell ungesättigtes oder aromatisches heterocyclisches System aus.

Der Cyclopentadienylring kann bei diesen Organoübergangsmetallverbindungen B) auch ein Heterocyclopentadienyl-Ligand sein, d.h. das mindestens ein C-Atom auch durch ein Heteroatom aus der Gruppe 15 oder 16 ersetzt sein kann. In diesem Fall ist bevorzugt ein C₅-Ring-Kohlenstoffatom durch Phosphor ersetzt. Insbesondere ist der Cyclopentadienylring mit weiteren Alkylgruppen substituiert, welche auch einen fünf oder sechsgliedrigen Ring bilden können, wie z.B. Tetrahydroindenyl, Indenyl, Benzindenyl oder Fluorenyl.

Als Donor kommen neutrale funktionelle Gruppen, weiche ein Element der 15. oder 16. Gruppe des Periodensystems enthalten, z.B. Amin, Imin, Carboxamid, Carbonsäureester, Keton (Oxo), Ether, Thioketon, Phosphin, Phosphit, Phosphinoxid, Sulfonyl, Sulfonamid, oder unsubstituierte, substituierte oder kondensierte, partiell ungesättigte heterocyclische oder heteroaromatische Ringsysteme in Betracht.

Bevorzugt werden substituierte Monocyclopentadienyl-, Monoindenyl-, Monofluorenyl- oder Heterocyclopentadienylkomplexe der allgemeinen Formel (II) 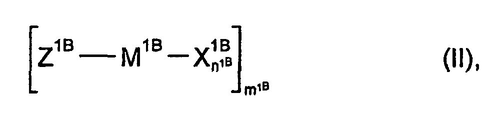 eingesetzt, worin die Variablen folgende Bedeutung besitzen:
- M^{1B}: Chrom, Molybdän oder Wolfram
- Z^{1B}: durch die allgemeine Formel (IIa) 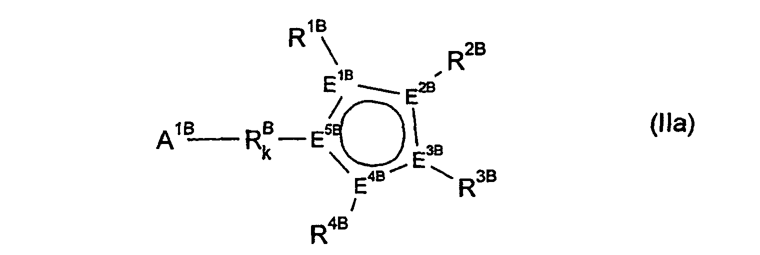
beschrieben ist, worin die Variablen folgende Bedeutung besitzen:
- E^{1B}-E^{5B}: Kohlenstoff oder maximal ein E^{1B} bis E^{5B} Phosphor oder Stickstoff,
- A^{1B}: NR^{5B}R^{6B}, PR^{5B}R^{6B}, OR^{5B}, SR^{5B} oder ein unsubstituiertes, substituiertes oder kondensiertes, partiell ungesättigtes heterocyclisches oder heteroaromatisches Ringsystem,
- R^{B}: eine der folgenden Gruppen: 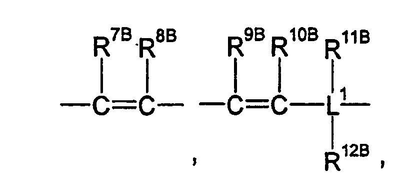 und zusätzlich, falls A^{1B} ein unsubstituiertes, substituiertes oder kondensiertes, partiell ungesättigtes heterocyclisches oder heteroaromatisches Ringsystem ist, auch 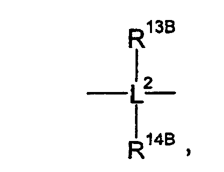 sein kann, wobei
- L¹,L²: Silizium oder Kohlenstoff bedeutet,
- k: 1, oder wenn A^{1B} ein unsubstituiertes, substituiertes oder kondensiertes, partiell ungesättigtes heterocyclisches oder heteroaromatisches Ringsystemist, auch 0 ist,
- X^{1B}: unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR^{15B}R^{16B}, OR^{15B}, SR^{15B}, SO₃R^{15B}, OC(O)R^{15B}, CN, SCN, β-Diketonat, CO, BF₄-, PF₆-, oder sperrige nichtkoordinierende Anionen,
- R^{1B}-R^{16B}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{17B}₃, wobei die organischen Reste R^{1B}-R^{16B} auch durch Halogene substituiert sein können und je zwei geminale oder vicinale Reste R^{1B}-R^{16B} auch zu einem fünf- oder sechsgliedrigen Ring verbunden sein können,
- R^{17B}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R^{17B} auch zu einem fünf- oder sechsgliedrigen Ring verbunden sein können,
- n^{1B}: 1, 2 oder 3 und
- m^{1B}: 1, 2 oder 3 bedeuten.

Als Übergangsmetall M^{1B} kommt insbesondere Chrom in Betracht.

Z^{1B} ist ein substituiertes Cyclopentadienylsystem, wobei der Rest-R^{B}ₖ-A^{1B} eine rigide gebundene Donorfunktion trägt. Der Cyclopentadienylring ist über eine η⁵-Bindung an das Übergangsmetall gebunden. Der Donor kann koordinativ gebunden oder nicht koordiniert sein. Bevorzugt ist der Donor intramolekular an das Metallzentrum koordiniert.

E^{1B} bis E^{5B} sind bevorzugt vier Kohlenstoffatome und ein Phosphoratom oder nur Kohlenstoffatome und ganz besonders bevorzugt sind alle E^{1B} bis E^{5B} gleich Kohlenstoff.

A^{1B} kann z.B. zusammen mit der Brücke R^{B} ein Amin, Ether, Thioether oder Phosphin bilden. A^{1B} kann aber auch ein unsubstituiertes, substituiertes oder kondensiertes, heterocyclisches aromatisches Ringsystem darstellen, welches neben Kohlenstoffringgliedern Heteroatome aus der Gruppe Sauerstoff, Schwefel, Stickstoff und Phosphor enthalten kann. Beispiele für 5-Ring Heteroarylgruppen, welche neben Kohlenstoffatomen ein bis vier Stickstoffatome und/oder ein Schwefeloder Sauerstoffatom als Ringglieder enthalten können, sind 2-Furyl, 2-Thienyl, 2-Pyrrolyl, 3-lsoxazolyl, 5-Isoxazolyl, 3-Isothiazolyl, 5-Isothiazolyl, 1-Pyrazolyl, 3-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 5-Imidazolyl, 1,2,4-Oxadiazol-3-yl, 1,2,4-Oxadiazol-5-yl, 1,3,4-Oxadiazol-2-yl oder 1,2,4-Triazol-3-yl. Beispiele für 6-gliedrige Heteroarylgruppen, welche ein bis vier Stickstoffatome und/oder ein Phosphoratom enthalten können, sind 2-Pyridinyl, 2-Phosphabenzolyl 3-Pyridazinyl, 2-Pyrimidinyl, 4-Pyrimidinyl, 2-Pyrazinyl, 1,3,5-Triazin-2-yl und 1,2,4-Triazin-3-yl, 1,2,4-Triazin-5-yl oder 1,2,4-Triazin-6-yl. Die 5-Ring und 6-Ring Heteroarylgruppen können hierbei auch durch C₁-C₁₀-Alkyl, C₆-C₁₀-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind 2-Indolyl, 7-Indolyl, 2-Cumaronyl, 7-Cumaronyl, 2-Thionaphthenyl, 7-Thionaphthenyl, 3-Indazolyl, 7-Indazolyl, 2-Benzimidazolyl oder 7-Benzimidazolyl. Beispiele für benzokondensierte 6-gliedrige Heteroarylgruppen sind 2-Chinolyl, 8-Chinoiyl, 3-Cinnolyl, 8-Cinnolyl, 1-Phthalazyl, 2-Chinazolyl, 4-Chinazolyl, 8-Chinazolyl, 5-Chinoxalyl, 4-Acridyl, 1-Phenanthridyl oder 1-Phenazyl. Bezeichnung und Nummerierung der Heterocyclen wurde aus L.Fieser und M. Fieser, Lehrbuch der organischen Chemie, 3. neubearbeitete Auflage, Verlag Chemie, Weinheim 1957 entnommen. In einer bevorzugten Ausführungsform ist A^{1B} ein unsubstituiertes, substituiertes oder kondensiertes, heteroaromatisches Ringsystem oder NR^{5B}R^{6B}. Hierbei sind einfache Systeme bevorzugt, die leicht zugänglich und billig sind und aus der folgenden Gruppe ausgewählt sind:

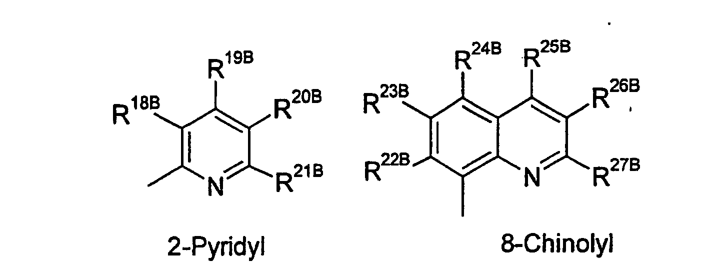

Als Substituenten R^{18B} bis R^{27B} kommen die gleichen Reste, wie für R^{1B}-R^{16B} beschrieben und Halogene, wie z.B. Fluor, Chlor oder Brom in Betracht, wobei gegebenenfalls auch zwei vicinale Reste R^{18B} bis R^{27B} zu einem 5- oder 6-gliedrigen Ring verbunden sein können und auch durch Halogene, wie Fluor, Chlor oder Brom substituiert sein können. Bevorzugte Reste R^{18B} bis R^{27B} sind Wasserstoff, Methyl, Ethyl, n-Propyl, n-Butyl, tert.-Butyl, n-Pentyl, n-Hexyl, n-Heptyl, n-Octyl, Vinyl, Allyl, Benzyl, Phenyl, Naphthyl, Biphenyl und Anthranyl, sowie Fluor, Chlor und Brom. Als Si-organische Substituenten kommen besonders Trialkylsilyl-Gruppen mit 1 bis 10 C-Atomen im Alkylrest in Betracht, insbesondere Trimethylsilyl-Gruppen. Ganz besonders bevorzugt ist A^{1B} ein unsubstituiertes oder substituiertes, z.B. alkylsubstituiertes, insbesondere in Position 8 verknüpftes Chinolyl, z.B. 8-Chinolyl, 8-(2-Methylchinolyl), 8-(2,3,4-Trimethylchinolyl), 8-(2,3,4,5,6,7-Hexamethylchinolyl. Es ist sehr einfach darstellbar und liefert gleichzeitig sehr gute Aktivitäten.

Die rigide Verbrückung R^{B} zwischen dem Cyclopentadienylring und der funktionellen Gruppe A^{1B} ist ein organisches Diradikal, bestehend aus Kohlenstoff und/oder Silizium Einheiten mit einer Kettenlänge von 1 bis 3. R^{B} kann mit L¹ oder mit CR⁹ an A^{1B} gebunden sein. Bevorzugt wegen der einfachen Darstellbarkeit ist die Kombination von R^{B} gleich CH=CH oder 1,2-Phenylen mit A^{1B} gleich NR^{5B}R^{6B}, als auch R^{B} gleich CH₂, C(CH₃)₂ oder Si(CH₃)₂ und A^{1B} gleich unsubstituiertes oder substituiertes 8-Chinolyl oder unsubstituiertes oder substituiertes 2-Pyridyl. Ganz besonders einfach zugänglich sind auch Systeme ohne Brücke R^{B}, bei denen k gleich 0 ist Bevorzugtes A^{1B} ist in diesem Falle unsubstituiertes oder substituiertes Chinolyl, insbesondere 8-Chinolyl.

Die Anzahl n^{1B} der Liganden X^{1B} hängt von der Oxidationsstufe des Übergangsmetalles M^{1B} ab. Die Zahl n^{1B} kann somit nicht allgemein angegeben werden. Die Oxidationsstufe der Übergangsmetalle M^{1B} in katalytisch aktiven Komplexen, sind dem Fachmann zumeist bekannt Chrom, Molybdän und Wolfram liegen sehr wahrscheinlich in der Oxidationsstufe +3 vor. Es können jedoch auch Komplexe eingesetzt werden, deren Oxidationsstufe nicht der des aktiven Katalysators entspricht Solche Komplexe können dann durch geeignete Aktivatoren entsprechend reduziert oder oxidiert werden. Bevorzugt werden Chromkomplexe in der Oxidationsstufe +3 verwendet

Der Übergangsmetallkomplex der Formel (II) kann als monomere, dimere oder trimere Verbindung vorliegen, wobei m^{1B} dann 1, 2 oder 3 ist. Dabei können z.B. ein oder mehrere Liganden X^{1B} zwei Metallzentren M^{1B} verbrücken.

Bevorzugte Komplexe sind z.B. 1-(8-Chinolyl)-2-methyl-4-methylcyclopentadienylchrom(III)dichlorid, 1-(8-Chinolyl)-3-isopropyl-5-methylcyclopentadienylchrom(III)dichlorid, 1-(8-Chinolyl)-3-tert.butyl-5-methylcyclopentadienylchrom(III)dichlorid, 1-(8-Chinolyl)-2,3,4,5-tetramethylcyclopentadienylchrom(III)dichlorid, 1-(8-Chinolyl)tetrahydroindenylchrom(III)dichlorid, 1-(8-Chinolyl)indenylchrom(III)dichlorid, 1-(8-Chinolyl)-2-methylindenylchrom(III)dichlorid, 1-(8-Chinolyl)-2-isopropylindenylchrom(III)dichlorid, 1-(8-Chinolyl)-2-ethylindenylchrom(III)dichlorid, 1-(8-Chinolyl)-2-tert.butylindenylchrom(III)dichlorid, 1-(8-Chinolyl)benzindenylchrom(III)dichlorid, 1-(8-Chinolyl)-2-methylbenzindenylchrom(III)dichlorid, 1-(8-(2-Methylchinolyl))-2-methyl-4-methylcyclopentadienylchrom(III)dichlorid, 1-(8-(2-Methylchinolyl))-2,3,4,5-tetramethylcyclopentadienylchrom(III)dichlorid, 1-(8-(2-Methylchinolyl))tetrahydroindenylchrom(III)dichlorid, 1-(8-(2-Methylchinolyl))indenylchrom(III)dichlorid, 1-(8-(2-Methylchinolyl))-2-methylindenylchrom(III)dichlorid, 1-(8-(2-Methylchinolyl))-2-isopropylindenylchrom(III)dichlorid, 1-(8-(2-Methylchinolyl))-2-ethylindenylchrom(III)dichlorid, 1-(8-(2-Methylchinolyl))-2-tert.butylindenylchrom(III)dichlorid, 1-(8-(2-Methylchinolyl))-benzindenylchrom(III)dichlorid oder 1-(8-(2-Methylchinolyl))-2-methylbenzindenylchrom(III)dichlorid.

Die Herstellung funktioneller Cyclopentadienyl-Liganden ist seit langer Zeit bekannt Verschiedene Synthesewege für diese Komplexliganden werden z.B. von M. Enders et. al. in Chem. Ber. (1996), 129, 459-463 oder P. Jutzi und U. Siemeling in J. Orgmet Chem. (1995), 500, 175-185 beschrieben.

Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE-A-19710615).

Erfindungsmäßig geignete Organoübergangsmetallverbindungen B)) sind außerdem imidochromverbindungen der allgemeinen Formel (III), 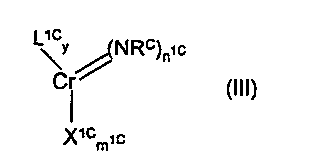 worin die Variablen folgende Bedeutung haben:
- R^{C}: R^{1C}C=NR^{2C}, R^{1C}C=O, R^{1C}C=O(OR^{2C}), R^{1C}C=S, (R^{1C})₂P=O, (OR^{1C})₂P=O, SO₂R^{1C}, R^{1C}R^{2C}C=N, NR^{1C}R^{2C} oder BR^{1C}R^{2C}, C₁-C₂₀-Alkyl, C₁-C₂₀-Cycloalkyl, C₂-C₂₀-Alkenyl, C₆-C₂₀-Aryl, Alkylaryl mit 1 bis 10 C-Atomen im Alkylrest und 6-20 C-Atomen im Aryl-rest, Wasserstoff, falls dieser an ein Kohlenstoffatom gebunden ist, wobei die organischen Reste R^{1C} und R^{2C} auch inerte Substituenten tragen können,
- X^{1C}: unabhängig voneinander Fluor, Chlor, Brom, Jod, NR^{3C}R^{4C}, NP(R^{3C})₃, OR^{3C}, OSi(R^{3C})₃, SO₃R^{3C}, OC(O)R^{3C}, β-Diketonat, BF₄⁻, PF₆⁻, oder sperrige schwach oder nicht koordinierende Anionen,
- R^{1C}-R^{4C}: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste R^{1C} bis R^{4C} auch inerte Substituenten tragen können,
- n^{1C}: 1 oder 2,
- m^{1C}: 1, 2 oder 3 ist, wobei m^{1C} entsprechend der Wertigkeit von Cr den Wert aufweist, bei dem der Metallocenkomplex der allgemeinen Formel (III) ungeladen vorliegt,
- L^{1C}: ein neutraler Donor und
- y: 0 bis 3.

Diese Verbindungen und deren Herstellung sind z.B. WO 01/09148 beschrieben.

Weitere geeignete Organoübergangsmetallverbindungen B) sind Übergangsmetallkomplexe mit einem dreizähnigen macrocyclischen Liganden.

Insbesondere sind als Organoübergangsmetallverbindungen B) auch Verbindung der allgemeinen Formel (IV) 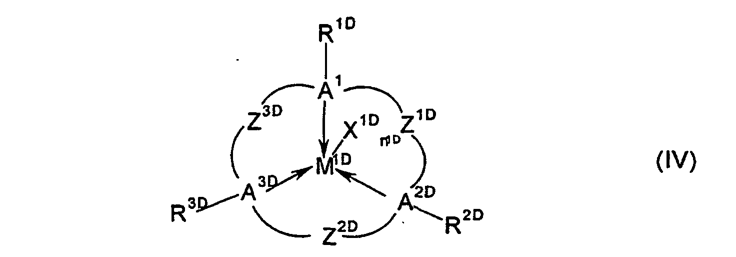 geeignet, worin die Variablen folgende Bedeutung haben:
- M^{1D}: ein Übergangsmetall der Gruppen 3-12 des Periodensystems,
- Z^{1D}-Z^{3D}: ein Diradikal, ausgewählt aus der folgenden Gruppe 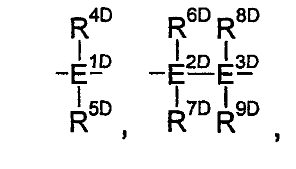
wobei
- E^{1D}-E^{3D}: Silizium oder Kohlenstoff bedeutet,
- A^{1D}-A^{3D}: Stickstoff oder Phosphor,
- R^{1D}-R^{9D}: Wasserstoff, C₁-C₂₀-Alkyl, 5- bis 7-gliedriges Cycloalkyl, das seinerseits eine C₆-C₁₀-Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest, SiR^{10D}₃, wobei die organischen Reste R^{1D}-R^{9D} durch Halogen(e) und weitere funktionelle Gruppen die bevorzugt Elemente der Gruppe 15 und/oder 16 des Periodensystems der Elemente tragen können, substituiert sein können und je zwei geminale oder vicinale Reste R^{1D}-R^{9D} auch zu einem fünf- oder sechsgliedrigen Ring verbunden sein können,
- X^{1D}: unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR^{10D}₂, OR^{10D}, SR^{10D}, SO₃R^{10D}, OC(O)R^{10D}, CN, SCN, =O, β-Diketonat, BF₄⁻, PF₆⁻, oder sperrige nichtkoordinierende Anionen,
- R^{10D}: unabhängig voneinander Wasserstoff, C₁-C₂₀-Alkyl, 5- bis 7-gliedriges Cycloalkyl, das seinerseits eine C₆-C₁₀ Arylgruppe als Substituent tragen kann, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R^{10D} auch zu einem fünf- oder sechsgliedrigen Ring verbunden sein können und
- n^{1D}: eine Zahl von 1 bis 4, bei dem der Metallocenkomplex der allgemeinen Formel (IV) ungeladen vorliegt.

Bevorzugte Organoübergangsmetallverbindungen der Formel (IV) sind:
[1,3,5-Tri(methyl)-1,3,5-Triazacyclohexan]chromtrichlorid,
[1,3,5-Tri(ethyl)-1,3,5-Triazacyclohexan]chromtrichlorid,
[1,3,5-Tri(octyl)-1,3,5-Triazacyclohexan]chromtrichlorid,
[1,3,5-Tri(dodecyl)-1,3,5-Triazacyclohexan]chromtrichlorid und
[1,3,5-Tri(benzyl)-1,3,5-Triazacyclohexan]chromtrichlorid,

Als Komponente B) können auch Mischungen verschiedener Organoübergangsmetallverbindungen eingesetzt werden.

Weiterhin enthält das Katalysatorsystem als Komponente C) bevorzugt mindestens eine kationenbildende Verbindung.

Geeignete kationenbildende Verbindungen C), die in der Lage sind, durch Reaktion mit der Organoübergangsmetallverbindung B) diese in eine kationische Verbindung zu überführen, sind z.B. Verbindungen vom Typ eines Aluminoxans, einer starken neutralen Lewis-Säure, einer ionischen Verbindung mit lewissaurem Kation oder einer ionischen Verbindung mit Brönsted-Säure als Kation. Im Falle von Metallocenkomplexen als Organoübergangsmetallverbindung B) werden die kationenbildende Verbindungen C) häufig auch als metalloceniumionenbildende Verbindungen bezeichnet

Als Aluminoxane können beispielsweise die in der WO 00/31090, beschriebenen Verbindungen eingesetzt werden. Besonders geeignet sind offenkettige oder cyclische Aluminoxanverbindungen der allgemeinen Formeln (X) oder (XI) 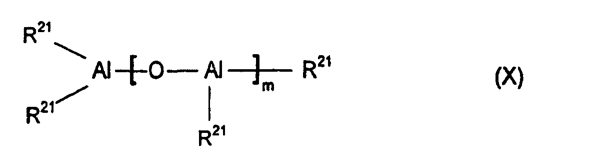 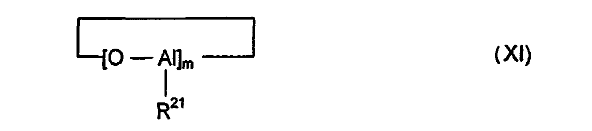 wobei
- R²¹: eine C₁-C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Aluminoxanverbindungen erfolgt üblicherweise durch Umsetzung einer Lösung von Trialkylaluminium mit Wasser. In der Regel liegen die dabei erhaltenen oligomeren Aluminoxanverbindungen als Gemische unterschiedlich langer, sowohl linearer als auch cyclischer Kettenmoleküle vor, so daß m als Mittelwert anzusehen ist Die Aluminoxanverbindungen können auch im Gemisch mit anderen Metallalkylen, bevorzugt mit Aluminiumalkylen vorliegen.

Weiterhin können als Komponente C) anstelle der Aluminoxanverbindungen der allgemeinen Formeln (X) oder (XI) auch modifizierte Aluminoxane eingesetzt werden, bei denen teilweise die Kohlenwasserstoffreste oder Wasserstoffatome durch Alkoxy-, Aryloxy-, Siloxy- oder Amidreste ersetzt sind.

Es hat sich als vorteilhaft erwiesen, die Organoübergangsmetallverbindung B) und die Aluminoxanverbindungen in solchen Mengen zu verwenden, daß das atomare Verhältnis zwischen Aluminium aus den Aluminoxanverbindungen und dem Übergangsmetall aus der Organoübergangsmetallverbindung B) im Bereich von 10:1 bis 1000:1, bevorzugt von 20:1 bis 500:1 und insbesondere im Bereich von 30:1 bis 400:1, liegt.

Als starke, neutrale Lewissäuren sind Verbindungen der allgemeinen Formel (XII)

M²X¹X²X³ (XII)

bevorzugt, in der
- M²: ein Element der 13. Gruppe des Periodensystems der Elemente bedeutet, insbesondere B, Al oder Ga, vorzugsweise B,
- X¹, X² und X³: für Wasserstoff, C₁-C₁₀-Alkyl, C₆-C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Weitere Beispiele für starke, neutrale Lewissäuren sind in der WO 00/31090 genannt

Besonders bevorzugt sind Verbindungen der allgemeinen Formel (XII), in der X¹, X² und X³ gleich sind, vorzugsweise Tris(pentafluorphenyl)boran.

Starke neutrale Lewissäuren, die sich als kationenbildende Verbindungen C) eignen, sind auch die Reaktionsprodukte aus der Umsetzung einer Boronsäure mt zwei Äquivalenten eines Aluminiumtrialkyls oder die Reaktionsprodukte aus der Umsetzung eines Aluminiumtrialkyls mit zwei Äquivalenten einer aciden fluorierten, insbesondere perfluorierten Kohlenstoffverbindung wie Pentafluorphenol oder Bis-(pentafluorphenyl)-borinsäure.

Als ionische Verbindungen mit lewissauren Kationen sind salzartige Verbindungen des Kations der allgemeinen Formel (XIII)

[(Y^{a+})Q₁Q₂...Q_{z}]^{d+} (XIII)

geeignet, in denen
- Y: ein Element der 1. bis 16. Gruppe des Periodensystems der Elemente bedeutet,
- Q₁ bis Q_{z}: für einfach negativ geladene Reste wie C₁-C₂₈-Alkyl, C₆-C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₁₅-Aryloxy, Silyl- oder Mercaptylgruppen
- a: für ganze Zahlen von 1 bis 6 und
- z: für ganze Zahlen von 0 bis 5 steht,
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nichtkoordinierende Gegenionen, insbesondere Borverbindungen wie sie auch in der WO 91/09882 genannt werden, bevorzugt Tetrakis(pentafluorophenyl)borat

Salze mit nicht koordinierenden Anionen können auch durch Zusammengabe einer Bor- oder Aluminiumverbindung, z.B. einem Aluminiumalkyl, mit einer zweiten Verbindung, die durch Reaktion zwei oder mehrere Bor- oder Aluminiumatome verknüpfen kann, z.B. Wasser, und einer dritten Verbindung, die mit der Bor- oder Aluminiumverbindung eine ionisierende ionische Verbindung bildet, z.B. Triphenylchlormethan, hergestellt werden. Zusätzlich kann eine vierte Verbindung, die ebenfalls mit der Bor- oder Aluminiumverbindung reagiert, z.B. Pentafluorphenol, hinzugefügt werden.

Ionische Verbindungen mit Brönsted-Säuren als Kationen haben vorzugsweise ebenfalls nichtkoordinierende Gegenionen. Als Brönstedsäure werden insbesondere protonierte Amin- oder Anilinderivate bevorzugt. Bevorzugte Kationen sind N,N-Dimethylanilinium, N,N-Dimethylcylohexylammonium und N,N-Dimethylbenzylammonium sowie Derivate der beiden letztgenannten.

Bevorzugte ionische Verbindungen C) sind N,N-Di-methylaniliniumtetrakis-(pentafluorophenyl)borate und insbesondere N,N-Dimethyl-cyclohexylammoniumtetrakis(pentafluorophenyl)borat oder N,N-Dimethylbenzylammoniumtetrakis(pentafluorophenyl)-borat.

Es können auch zwei oder mehrere Boratanionen miteinander verbunden sein, wie in dem Dianion [(C₆F₅)₂B-C₆F₄-B(C₆F₅)₂]²⁻, oder das Boratanion kann über eine Brücke mit einer geeigneten funktionellen Gruppe auf der Trägeroberfläche gebunden sein.

Weitere geeignete kationanbildende Verbindungen C) sind in der WO 00/31090 aufgelistet.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 20 Äquivalente, bevorzugt 1 bis 10 Äquivalente, bezogen auf die Organoübergangsmetallverbindung B).

Geeignete kationenbildende Verbindungen C) sind auch Bor-Aluminium-Verbindungen wie Di-[bis(pentafluorphenylboroxy)]methylalan. Entsprechende Bor-Aluminium-Verbindungen sind beispielsweise die in der WO 99/06414 offenbart.

Es können auch Gemische aller zuvor genannten kationenbildenden Verbindungen C) eingesetzt werden. Bevorzugte Mischungen enthalten Aluminoxane, insbesondere Methylaluminoxan, und eine ionische Verbindung, insbesondere eine, die das Tetrakis(pentafluorphenyl)borat-Anion enthält, und/oder eine starke neutrale Lewissäure, insbesondere Tris(pentafluorphenyl)boran.

Vorzugsweise werden sowohl der Organoübergangsmetallverbindung B) als auch die kationenbildende Verbindungen C) in einem Lösungsmittel eingesetzt, wobei aromatische Kohlenwasserstoffe mit 6 bis 20 C-Atomen, insbesondere Xylole und Toluol, bevorzugt sind.

Das Katalysatorsystem beinhaltet als weitere Komponente D) mindestens eine Organomagnesiumverbindung. Organomagnesiumverbindungen D) enthalten Magnesium in der Oxidationsstufe 2, das mindestens einen Liganden der Gruppe Kohlenwasserstoffe, Alkoxide und Aryloxide, Amide, Carboxylate oder Acetylacetonate enthält. Bevorzugte Organomagnesiumverbindungen D) tragen mindestens einen C₁-C₂₀-Kohlenwasserstoffrest als Liganden. Dies sind beispielsweise Organomagnesiumverbindungen der allgemeinen Formel (XIV),

Mg(R^{1E})ᵣ(R^{2E})₂₋ᵣ (XIV)

in der
- R^{1E}: Wasserstoff, C₁-C₂₀-Alkyl, C₆-C₂₀-Aryl, Alkylaryl oder Arylalkyl mit jeweils 1 bis 10 C-Atom im Alkylrest und 6 bis 19 C-Atomen im Arylrest, SiR^{3E}₃
- R^{2E}: Wasserstoff, Fluor, Chlor, Brom, Jod, C₁-C₂₀-Alkyl, C₆-C₂₀-Aryl, Alkylaryl, Arylalkyl oder Alkoxy mit jeweils 1 bis 10 C-Atomen im Alkylrest und 6 bis 19 C-Atomen im Arylrest,
- R^{3E}: C₁-C₂₀-Alkyl, C₆-C₂₀-Aryl, Alkylaryl oder Arylalkyl mit jeweils 1 bis 10 C-Atom im Alkylrest und 6 bis 19 C-Atomen im Arylrest
- r: 1 oder 2
bedeuten.

Als C-organische Reste R^{1E} und R^{2E} kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls auch R^{1E} und R^{2E} zu einem 5- oder 6-gliedrigen Ring verbunden sein können und die organischen Reste R^{1E} und R^{2E} auch durch Halogene, wie z.B. Fluor, Chlor oder Brom substituiert sein können. Bevorzugt Reste R^{1E} und R^{2E} sind Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl oder Naphthyl. Als Si-organische Reste SiR^{3E}₃ kommen für R^{3E} die gleichen Reste, wie oben für R^{1E} und R^{2E} näher ausgeführt in Betracht, wobei gegebenenfalls auch zwei R^{3E} zu einem 5- oder 6-gliedrigen Ring verbunden sein können. Beispiele für geeignete Si-organische Reste sind Trimethylsilyl, Triethylsilyl, Butyldimethylsilyl, Tributylsilyl, Triallylsilyl, Triphenylsilyl oder Dimethylphenylsilyl.

Besonders geeignete Organomagnesiumverbindungen sind Methylmagnesiumchlorid, Methylmagnesiumbromid, Ethylmagnesiumchlorid, Ethylmagnesiumbromid, n-Butylmagnesiumchlorid, Dimethylmagnesium, Diethylmagnesium, Di-n-butylmagnesium, n-Butyl-n-octylmagnesium und n-Butyl-n-heptyl-magnesium, insbesondere n-Butyl-n-octylmagnesium.

Es können eine oder mehrere Organomagnesiumverbindungen D) verwendet werden. Bevorzugt wird eine Organomagnesiumverbindung D) verwendet. Die Organomagnesiumverbindung D) ist in einer solchen Menge im Katalysatorsystem enthalten, daß das molare Verhältnis von Mg zu Übergangsmetall aus Organoübergangsmetallverbindung B) von 2000:1 bis 0,1:1, bevozugt von 800:1 bis 0,2:1 und besonders bevorzugt von 100:1 bis 1:1 beträgt.

Das Katalysatorsystem kann als weitere Komponente E) zusätzlich noch eine Metallverbindung der allgemeinen Formel (XV),

M^{F}(R^{1F})ᵣ^{F}(R^{2F})ₛ^{F}(R^{3F})ₜ^{F} (XV)

in der
- M^{F}: Li, Na, K, Be, Ca, Sr, Ba, Bor, Aluminium, Gallium, Indium oder Thallium bedeutet,
- R^{1F}: Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
- R^{2F} und R^{3F}: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r^{F}: eine ganze Zahl von 1 bis 3
und
- s^{F} und t^{F}: ganze Zahlen von 0 bis 2 bedeuten, wobei die Summe r^{F}+s^{F}+t^{F} der Wertigkeit von M^{F} entspricht,
enthalten, wobei die Komponente E) nicht identisch mit der Komponente C) ist. Es können auch Mischungen verschiedener Metallverbindungen der Formel (XV) eingesetzt werden.

Von den Metallverbindungen der allgemeinen Formel (XV) sind diejenigen bevorzugt, in denen
- M^{F}: Lithium oder Aluminium bedeutet und
- R^{2F} und R^{3F}: für C₁-C₁₀-Alkyl stehen.

Besonders bevorzugte Metallverbindungen der Formel (XV) sind n-Butyllithium, Tri-n-hexylaluminium, Tri-iso-butyl-aluminium, Tri-n-butylaluminium, Triethylaluminium, Dimethylaluminiumchlorid, Dimethylaluminiumfluorid, Methylaluminiumdichlorid, Methylaluminiumsesquichlorid, Diethylaluminiumchlorid und Trimethylaluminium und Mischungen davon. Auch die partiellen Hydrolyseprodukte von Aluminiumalkylen mit Alkoholen können eingesetzt werden.

Wenn eine Metallverbindung E) eingesetzt wird, ist sie bevorzugt in einer solchen Menge im Katalysatorsystem enthalten, daß das molare Verhältnis von M^{F} aus Formel (XV) zu Obergangsmetall aus Organoübergangsmetallverbindung B) von von 2000:1 bis 0,1:1, bevozugt von 800:1 bis 0,2:1 und besonders bevorzugt von 100:1 bis 1:1 beträgt.

Prinzipiell wird zur Herstellung der erfindungsgemäßen Katalysatorsystems mindestens eine der Komponenten B) oder C) auf dem Träger durch Physisorption oder auch durch eine chemische Reaktion, das bedeutet eine kovalente Anbindung der Komponenten, mit reaktiven Gruppen der Trägeroberfläche fixiert. Die Reihenfolge der Zusammengabe von Trägerkomponente, Komponente B) und gegebenenfalls Komponente C) ist beliebig. Die Komponenten B) und C) können unabhängig voneinander oder auch gleichzeitig zugegeben werden. Nach den einzelnen Verfahrensschritten kann der Feststoff mit geeigneten inerten Lösungsmitteln wie aliphatischen oder aromatischen Kohlenwasserstoffen gewaschen werden.

In einer bevorzugten Ausführungsform wird die Organoübergangsmetallverbindung B) in einem geeigneten Lösungsmittel mit der kationenbildenden Verbindung C) in Kontakt gebracht, wobei üblicherweise ein lösliches Reaktionsprodukt, ein Addukt oder ein Gemisch erhalten wird. Die so erhaltene Zubereitung wird dann mit dem gegebenenfalls vorbehandelten calcinierten Hydrotalcit A) in Kontakt gebracht, und das Lösungsmittel und das Lösungsmittel vollständig oder teilweise entfernt. Bevorzugt erhält man dann einen Feststoff in Form eines frei fließenden Pulvers. Beispiele für die technische Realisierung des obigen Verfahrens sind in WO 96/00243, WO 98/40419 oder WO 00/05277 beschrieben. Einer weitere bevorzugte Ausführungsform ist, zunächst die kationenbildende Verbindung C) auf dem calcinierten Hydrotalcit A) zu erzeugen und anschließend diese geträgerte kationenbildende Verbindung mit der Organoübergangsmetallverbindung B) in Kontakt zu bringen.

Die Organomagnesiumverbindung D) kann ebenfalls in beliebiger Reihenfolge mit den Komponenten A), B) und optional C) und E) umgesetzt werden. Bevorzugt wird D) zuerst mit Komponente A) in Kontakt gebracht und danach mit den Komponenten B) und C) wie weiter oben verfahren. In einer anderen bevorzugten Ausführungsform wird ein Katalysatorfeststoff aus den Komponenten A), B) und C) wie weiter oben beschrieben dargestellt und dieser während, zu Beginn oder kurz vor der Polymerisation mit der Komponente D) in Kontakt gebracht. Bevorzugt wird D) zuerst mit dem zu polymerisierenden alpha-Olefin in Kontakt gebracht und anschliessend der Katalysatorfeststoff aus den Komponenten A), B) und C) wie weiter oben beschrieben, zugegebenDie Komponente E) ist nur optional. Bevorzugt wird keine weitere Komonente E) verwendet Wird eine Komponente E) verwendet so gelten für sie die gleichen bevorzugten Ausführungsformen zur Kontaktierung mit A), B) und C) wie für Komponente D).

Es ist weiterhin möglich, das Katalysatorsystem zunächst mit α-Olefinen, bevorzugt linearen C₂-C₁₀-1-Alkene und insbesondere mit Ethylen oder Propylen vorzupolymerisieren und dann den resultierenden vorpolymerisierten Katalysatorfeststoff bei der eigentlichen Polymerisation zu verwenden. Üblicherweise liegt das Massenverhältnis von bei der Vorpolymerisation eingesetztem Katalysatorfeststoff zu hinzupolymerisiertem Monomer im Bereich von 1:0,1 bis 1:200.

Weiterhin kann als Additiv während oder nach der Herstellung des geträgerten Katalysatorsystems eine geringe Menge eines Olefins, bevorzugt eines α-Olefins, beispielsweise Vinylcyclohexan, Styrol oder Phenyldimethylvinylsilan, als modifizierende Komponente, ein Antistatikum oder eine geeignete inerte Verbindung wie eine Wachs oder Öl zugesetzt werden. Das molare Verhältnis von Additiven zu Übergangsmetallverbindung B) beträgt dabei üblicherweise von 1:1000 bis 1000:1, bevorzugt von 1:5 bis 20:1.

Die Polymerisation kann in bekannter Weise in Masse, in Suspension, in der Gasphase oder in einem überkritischen Medium in den üblichen, für die Polymerisation von Olefinen verwendeten Reaktoren durchgeführt werden. Sie kann diskontinuierlich oder bevorzugt kontinuierlich in einer oder mehreren Stufen erfolgen. Es kommen Hochdruck-Polymerisationsverfahren in Rohrreaktoren oder Autoklaven, Lösungsverfahren, Suspensionsverfahren, gerührte Gasphasenverfahren oder Gasphasenwirbelschichtverfahren in Betracht.

Die Polymerisationen werden üblicherweise bei Temperaturen im Bereich von -60 bis 350°C und unter Drücken von 0,5 bis 4000 bar bei mittleren Verweilzeiten von 0,5 bis 5 Stunden, bevorzugt von 0,5 bis 3 Stunden durchgeführt. Die vorteilhaften Druck- und Temperaturbereiche zur Durchführung der Polymerisationen hängen stark von der Polymerisationsmethode ab. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 280°C, insbesondere zwischen 220 und 270°C. Bei Niederdruck-Polymerisationsverfahren wird in der Regel eine Temperatur eingestellt, die mindestens einige Grad unter der Erweichungstemperatur des Polymerisates liegt. Insbesondere werden in diesen Polymerisationsverfahren Temperaturen zwischen 50 und 180°C, vorzugsweise zwischen 70 und 120°C, eingestellt. Bei den Suspensionspolymerisationen wird üblicherweise in einem Suspensionsmittel, vorzugsweise in einem inerten Kohlenwasserstoff, wie beispielsweise iso-Butan, oder aber in den Monomeren selbst polymerisiert. Die Polymerisationstemperaturen liegen i.a. im Bereich von -20 bis 115°C, der Druck i.a. im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifenreaktoren, gearbeitet werden. Insbesondere kann nach dem Phillips-PF-Verfahren, wie in der US-A 3 242 150 und US-A 3 248 179 beschrieben, gearbeitet werden.

Von den genannten Polymerisationsverfahren ist die Gasphasenpolymerisation, insbesondere in Gasphasenwirbelschicht-Reaktoren, die Lösungspolymerisation, sowie die Suspensionspolymerisation, insbesondere in Schleifen- und Rührkesselreaktoren, besonders bevorzugt. Die Gasphasenpolymerisation kann auch in der sogenannten condensed oder supercondensed Fahrweise durchgeführt werden, bei dem ein Teil des Kreisgases unter den Taupunkt gekühlt und als Zwei-Phasen-Gemisch in den Reaktor zurückgeführt wird. Die verschiedenen oder auch gleichen Polymerisationsverfahren können auch wahlweise miteinander in Serie geschaltet sein und so eine Polymerisationskaskade bilden. Weiterhin können bei den Polymerisationen auch Molmassenregler, beispielsweise Wasserstoff, oder übliche Zuschlagstoffe wie Antistatika mitverwendet werden.

Die erfindungsgemäßen Katalysatorsysteme zeichnen sich dadurch aus, daß sie eine sehr hohe Produktivität bei der Polymerisation von Olefinen aufweisen, Vorteile bei der Aufarbeitung der Polymerisate nach der Polymerisation bieten, und zu deutlich weniger Problemen im Hinblick auf Katalysatorrückstände im Polymerisat führen. Die mit dem erfindungsgemäßen Katalysatorsystem hergestellten Polymerisate eigenen sich bevorzugt für solche Anwendungen, die eine hohe Produktreinheit erfordern. Die erfindungsgemässen Katalysatorsysteme zeigen ausserdem auch bei relativ niedrigem molaren Verhältnis von Alumoxan zu Organoübergangsmetall eine sehr gute Aktivität.

### Beispiele

Zur Charakterisierung der Proben wurden folgende Prüfungen durchgeführt:
Bestimmung des Gehalts der Elemente Magnesium und Aluminium:
   Der Gehalt der Elemente Magnesium und Aluminium wurde an den in einem Gemisch aus konzentrierter Salpetersäure, Phosphorsäure und Schwefelsäure aufgeschlossenen Proben mit einem induktiv gekoppelten Plasma-Atom-Emissions-(ICP-AES) Spektrometer der Fa. Spectro, Kleve, Deutschland, anhand der Spektrallinien bei 277,982 nm für Magnesium und bei 309,271 nm für Aluminium bestimmt.
Bestimmung der spezifischen Oberfläche:
   Durch Stickstoff-Adsorption nach DIN 66131
Bestimmung des Porenvolumens:
   Durch Quecksilber-Porosimetrie nach DIN 66133
Bestimmung von D10, D50 und D90:
   Es wurde in Dispersion in Isopropanol durch Laserbeugung mit einem Mastersizer X der Firma Malvern, Großbritannien die Teilchengrößenverteilung der Partikel gemessen. Unter den Größen D10, D50 und D90 sind die volumenbezogenen Perzentilwerte der Durchmesser zu verstehen. Der Wert D50 ist gleichzeitig der Median der Teilchengrößenverteilung.
Bestimmung des Glühverlusts:
   Der Glühverlust ist der Gewichtsverlust, den eine Probe erleidet, die in zwei Schritten zunächst für 30 min bei 200°C in einem Trockenschrank und dann für 1 Stunde bei 950°C in einem Muffelofen erhitzt wird.
Röntgendiffraktometrie:
   Die Röntgendiffraktometrie wurde mittels eines Pulverdiffraktometers D 5000 der Firma Siemens in Refelexion mit Cu-Kα-Strahlung durchgeführt.
Bestimmung der OH-Zahl:
   Ca. 20 g des zu untersuchenden Feststoffs werden in 250 ml Heptan suspendiert und die Suspension wird unter Rühren auf 0°C gekühlt. Bei konstanter Temperatur werden 40 ml einer 2 M Lösung von Triethylalumium in Heptan kontinuierlich Ober 30 min zugegeben. Das sich dabei bildende Ethan wird aufgefangen und volumetrisch bestimmt. Die OH-Zahl ist die molare Menge an gebildetem Ethan/Masse an eingesetztem Träger.
Bestimmung der Restfeuchte:
   Die Restfeuchte ist der Gehalt an flüchtigen Anteilen, der sich bei einer Messung unter Inertgasatmosphäre mit einem Mettler LJ 16 Moister Analyzer der Firma Mettler-Toledo, Greifensee, Schweiz ergibt.
Bestimmung des Eta-Wertes:
   mit einem automatischen Ubbelohde Viskometer (Lauda PVS 1) mit Dekalin als Lösungsmittel bei 130 °C (ISO1628 bei 130°C, 0,001 g/ml Decalin)

Als Trägermaterial wurde Puralox MG 61 der Fa. Condea Chemie GmbH eingesetzt. Hierbei handelt es sich um für 3 Stunden bei 550°C in einem Drehrohrofen calciniertes Magnesium-Aluminium-Mischoxid mit einem MgO-Gehalt von 61 Gew.-%, eine spezifischer Oberfläche von 156 m²/g, einem Porenvolumen von 1,4 ml/g, und einer Partikelgrößenverteilung, die charakterisiert ist durch D10/D50/D90 von 21,1/44,0/71,0 mm. Am Ausgangsmaterial wurde ein Glühverlust von 11,6 Gew.-% bestimmt. Fig. 1 zeigt ein Röntgendiffraktogramm dieses Magnesium-Aluminium-Mischoxid.

Das oben eingesetzte Ausgangs Mischoxid wurde 3h jedoch nur bei 250°C calciniert. Fig. 2 zeigt das Röntgendiffraktogramm dieses teilcalcinierten dieses Magnesium-Aluminium-Mischoxid.

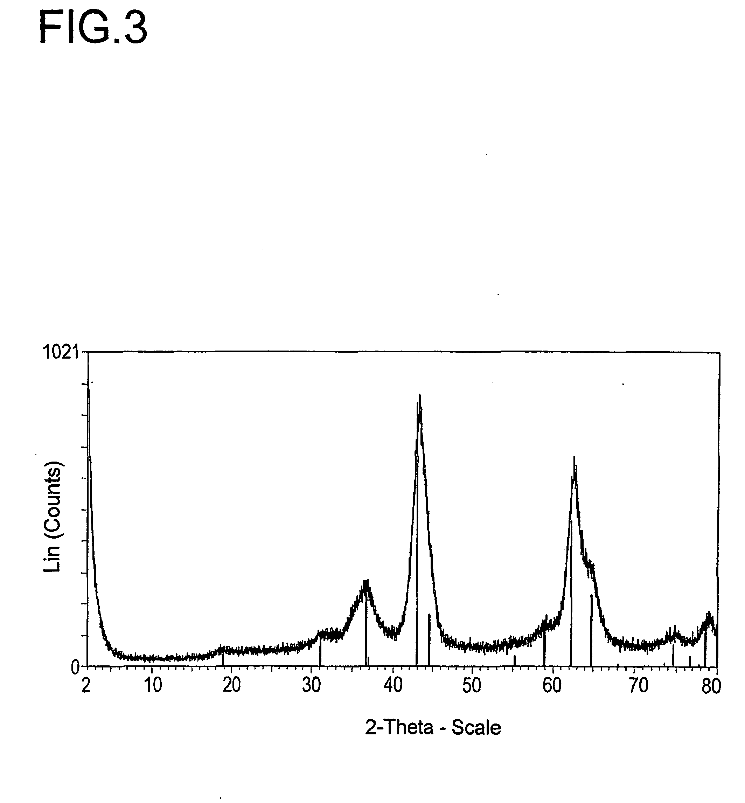

Das oben eingesetzte Ausgangs Mischoxid wurde 3h jedoch bei 800°C calciniert. Fig. 3 zeigt das Röntgendiffraktogramm dieses teilcalcinierten dieses Magnesium-Aluminium-Mischoxid. Es hatte eine spezifische Oberfläche von 138 m²/g, ein Porenvolumen von 1,59 ml/g und einen Glühverlust von 3,74 Gew.-%

Ein Röntgendiffraktogramm eines nicht calcinierten Ausgangsmaterials (siehe Vergleichsbeispiel 3) mit einer spezifische Oberfläche von 236 m²/g, einem Porenvolumen von 1,12 ml/g und einem Glühverlust von 45,6 Gew.-% ist in Fig. 4 abgebildet.

### Beispiel 1

### a) Trägervorbehandlung

100 g Puralox MG 61 wurden zunächst über 30 Stunden bei 180°C und 1 mbar getrocknet und anschließend unter Stickstoffatmosphäre aufbewahrt. Der Glühverlust reduzierte sich hierdurch auf 7,1 Gew.-%.

### Beispiel 1

### a) Trägervorbehandlung

100 g Puralox MG 61 der Fa. Condea Chemie GmbH wurden 6 h bei 150°C ausgeheizt. Der Träger enthielt anschließend eine OH-Zahl von 0,19 mmol/g Träger.

### b) Metallocen/MAO-Beladung

287,1 mg (nBu-Cp)₂ZrCl₂ (Fa. Witco, Eurecen 5031) wurden in 4,1 ml Toluol suspendiert, mit 18,6 ml einer 4,75 M Lösung von MAO in Toluol der Firma Albemarle versetzt und 45 min gerührt. Die Metallocen/MAO-Lösung wurde innerhalb von 10 min zu 14,2 g des desaktivierten Trägers aus Beispiel 4 a) gegeben und 60 min nachgerührt. Danach wurde der Katalysator bei Raumtemperatur bei 10⁻³ mbar getrocknet. Es wurden 20,2 g eines hellgelb-beigen Feststoffs erhalten.

### Beispiel 2

### Polymerisation

In einen 11-Autoklaven, der mit Argon inertisiert worden war, wurden 400 ml Isobutan und 3 ml einer 20 gew.-%igen Butyl-Octyl-Magnesium-Lösung in Heptan (entsprechend 150 mg Butyl-Octyl-Magnesium) gegeben und schließlich 24,0 mg des in Beispiel 1 b) erhaltenen Katalysatorfeststoffs zudosiert. Es wurde 90 min bei 40 bar Ethylendruck und 70°C polymerisiert. Die Polymerisation wurde durch Ablassen des Drucks abgebrochen und das Produkt durch das Bodenventil ausgetragen. Es wurden 400 g Polyethylen mit einem eta-Wert von 3,68 dl/g erhalten. Produktivität: 16670 g PE/g Katalysatorfeststoff

### Vergleichsbeispiel V1

### Polymerisation

In einen 1I-Autoklaven, der mit Argon inertisiert worden war, wurden 400 ml Isobutan und 3 ml einer Butyl-Lithium-Lösung in Heptan (entsprechend 30 mg Butyl-Lithium) gegeben und schließlich 22,8 mg des in Beispiel 1 b) erhaltenen Katalysatorfeststoffs zudosiert Es wurde 90 min bei 40 bar Ethylendruck und 70°C polymerisiert. Die Polymerisation wurde durch Ablassen des Drucks abgebrochen und das Produkt durch das Bodenventil ausgetragen. Es wurden 200 g Polyethylen mit einem eta-Wert von 3,95 dl/g erhalten.
Produktivität 8800 g PE/g Katalysatorfeststoff

### Beispiel 3

### Polymerisation

In einen 1I-Autoklaven, der mit einer Vorlage von 100g Polyethyen beschickt und mit Argon inertisiert worden war, wurden 1,5 ml einer 20 gew.-%igen Butyl-Octyl-Magnesium-Lösung in Heptan (entsprechend 75 mg Butyl-Octyl-Magnesium), 1 ml einer Costelan AS 100 Lösung (Antistatikum) und 8 ml Heptan gegeben und schließlich 42,0 mg des in Beispiel 1 b) erhaltenen Katalysatorfeststoffs zudosiert. Es wurde 90 min bei 10 bar Ethylendruck (20 bar Gesamtdruck) und 70°C polymerisiert. Die Polymerisation wurde durch Ablassen des Drucks abgebrochen und das Produkt durch das Bodenventil ausgetragen. Es wurden 95 g Polyethylen mit einem eta-Wert von 2,44 dl/g erhalten.
Produktivität: 2200 g PE/g Katalysatorfeststoff

### Vergleichsbeispiel V2

### Polymerisation

In einen 1I-Autoklaven, der mit einer Vorlage von 100g Polyethyen beschickt und mit Argon inertisiert worden war, wurden 2 ml einer Triisoprenylaluminium-Lösung in Heptan (entsprechend 75 mg Triisoprenylaluminium), 1 ml einer Costelan AS 100 Lösung und 8 ml Heptan gegeben und schließlich 40,0 mg des in Beispiel 1 b) erhaltenen Katalysatorfeststoffs zudosiert. Es wurde 90 min bei 10 bar Ethylendruck (20 bar Gesamtdruck) und 70°C polymerisiert. Die Polymerisation wurde durch Ablassen des Drucks abgebrochen und das Produkt durch das Bodenventil ausgetragen.
Produktivität: kleiner als 100 g PE/g Katalysatorfeststoff

### Vergleichsbeispiel V3

### a) Trägervorbehandlung

Es wurde verfahren wie im Beispiel 1, jedoch mit dem Unterschied, daß das nicht calcinierte Magnesium-Aluminium-Hydroxid eingesetzt wurde. Dies hatte eine spezifische Oberfläche von 236 m²/g und ein Porenvolumen von 1,12 ml/g. Der Glühverlust betrug 45,6 Gew.-%. Fig. 4 zeigt ein Röntgendiffraktogramm dieses Materials.

### b) Metällocen/MAO-Beladung

276,9 mg (nBu-Cp)₂ZrCl₂ (Fa. Witco, Eurecen 5031) wurden in 4 ml Toluol suspendiert, mit 17,9 ml einer 4,75 M Lösung von MAO in Toluol der Firma Albemarle versetzt und 45 min gerührt. Die Metallocen/MAO-Lösung wurde innerhalb von 10 min zu 13,7 g des desaktivierten Trägers aus Beispiel V3 a) gegeben und 60 min nachgerührt. Danach wurde der Katalysator bei Raumtemperatur bei 10⁻³ mbar getrocknet. Es wurden 18,8 g eines hellgelb-beigen Feststoffs erhalten.

### Vergleichsbeispiel V4

### Polymerisation

In einen 10I-Autoklaven, der mit Argon inertisiert worden war, wurden 5000 ml Isobutan und 2 ml einer 20 gew.-%igen Butyl-Octyl-Magnesium-Lösung in Heptan (entsprechend 100 mg Butyl-Octyl-Magnesium) gegeben und schließlich 330 mg des in Beispiel V3 b) erhaltenen Katalysatorfeststoffs zudosiert. Es wurde 90 min bei 40 bar Ethylendruck und 70°C polymerisiert. Die Polymerisation wurde durch Ablassen des Drucks abgebrochen und das Produkt durch das Bodenventil ausgetragen. Es wurden 950 g Polyethylen mit einem eta-Wert von 3,58 dl/g erhalten. Produktivität 2880 g PE/g Katalysatorfeststoff

### Vergleichsbeispiel V5

### Polymerisation

In einen 1I-Autoklaven, der mit einer Vorlage von 100g Polyethyen beschickt und mit Argon inertisiert worden war, wurden 1,5 ml einer 20 gew.-%igen Butyl-Octyl-Magnesium-Lösung in Heptan (entsprechend 75 mg Butyl-Octyl-Magnesium), 1 ml einer Costelan AS 100 Lösung (Gew.%ige Lösung) und 8 ml Heptan gegeben und schließlich 76,0 mg des in Beispiel V3 b) erhaltenen Katalysatorfeststoffs zudosiert. Es wurde 90 min bei 10 bar Ethylendruck (20 bar Gesamtdruck) und 70°C polymerisiert. Die Polymerisation wurde durch Ablassen des Drucks abgebrochen und das Produkt durch das Bodenventil ausgetragen. Es wurden 51 g Polyethylen erhalten.
Produktivität: 670 g PE/g Katalysatorfeststoff

### Vergleichsbeispiel V6

### a) Trägervorbehandlung

100 g ES 70 X, ein sprühgetrocknetes Kieselgel der Fa. Crosfield wurden 6 h bei 600°C ausgeheizt. Der Träger enthielt anschließend eine OH-Zahl von 0,15 mmol/g Träger.

### b) Metallocen/MAO-Beladung

258,8 mg (nBu-Cp)₂ZrCl₂ (Fa. Witco, Eurecen 5031) wurden in 0,6 ml Toluol suspendiert, mit 16,7 ml einer 4,75 M Lösung von MAO in Toluol der Firma Albemarle versetzt und 45 min gerührt. Die Metallocen/MAO-Lösung wurde innerhalb von 10 min zu 12,8 g des in Vergleichsbeispiel V6 a) hergestellten desaktivierten Trägermaterials, das annähernd die gleiche OH-Zahl wie der in Beispiel 1 b) eingesetzte Träger aufwies, gegeben und 60 min nachgerührt. Danach wurde der Katalysator bei Raumtemperatur bei 10⁻³ mbar getrocknet. Es wurden 18,0 g eines hellgelb-beigen Feststoffs erhalten.

### Vergleichsbeispiel V7

### Polymerisation

Beispiel 2 wurde wiederholt, jedoch wurden 24,8 mg des in Vergleichsbeispiel V6 b) hergestellten Katalysatorfeststoffs eingesetzt. Es wurden 300 g Polyethylen mit einem eta-Wert von 3,55 dl/g erhalten.
Produktivität: 12100 g PE/g Katalysatorfeststoff

### Vergleichsbeispiel V8

### Polymerisation

Vergleichsbeispiel V1 wurde wiederholt, jedoch wurden 32 mg des in Vergleichsbeispiel V6 b) hergestellten Katalysatorfeststoffs eingesetzt. Es wurden 260 g Polyethylen mit einem eta-Wert von 3,65 dl/g erhalten.
Produktivität 8100 g PE/g Katalysatorfeststoff

### Vergleichsbeispiel V9

### Metallocen/MAO-Beladung

234,5 mg (nBu-Cp)₂ZrCl₂ (Fa. Witco, Eurecen 5031) wurden in 70 ml Toluol suspendiert, mit 15,1 ml einer 4,75 M Lösung von MAO in Toluol der Firma Albemarle versetzt und 45 min gerührt. Die Metallocen/MAO-Lösung wurde innerhalb von 10 min zu 11,6 g des in Vergleichsbeispiel V6 a) hergestellten desaktivierten Trägermaterials, das annähernd die gleiche OH-Zahl wie der in Beispiel 4 b) eingesetzte Träger aufwies, gegeben und 60 min nachgerührt. Danach wurde der Katalysator bei Raumtemperatur bei 10⁻³ mbar getrocknet. Es wurden 18,0 g eines hellgelb-beigen Feststoffs erhalten.

### Vergleichsbeispiel V10

### Polymerisation

Beispiel 3 wurde wiederholt, jedoch wurden 87 mg des in Vergleichsbeispiel V9 hergestellten Katalysatorfeststoffs eingesetzt. Es wurden 88 g Polyethylen erhalten.
Produktivität: 1010 g PE/g Katalysatorfeststoff

### Vergleichsbeispiel 11

### Polymerisation

Vergleichsversuch V2 wurde wiederholt, jedoch wurden 70,0 mg des in Vergleichsbeispiel V9 hergestellten Katalysatorfeststoffs eingesetzt. Es wurden 79 g Polyethylen erhalten. Produktivität: 1100 g PE/g Katalysatorfeststoff

### Beispiel 4

### a) Trägervorbehandlung

5 g Puralox MG 61 wurden 8 Stunden bei 180°C und 1 mbar getrocknet und anschließend unter Stickstoffatmosphäre aufbewahrt

### b) Metallocen/MAO-Beladung

130,3 mg Dichloro-[1-(8-chinolyl)-2,3,4,5-tetramethylcyclopentadienyl]chrom (0,350 mmol) wurden in 9,2 ml einer 4,75 M Lösung von MAO in Toluol der Firma Albemarle (entspr. 43,75 mmol Al) gelöst und 15 min bei Raumtemperatur gerührt (Cr:Al = 1:125).

Diese Lösung wurde unter Rühren direkt auf das in Beispiel 4 a) vorbehandelte calcinierte Hydrotalcit gegeben und der Ansatz nach beendeter Zugabe eine Stunde gerührt. Das so erhaltene Reaktionsgemisch wurde zwei Stunden stehen gelassen und anschließend unter Vakuum bei Raumtemperatur getrocknet Es wurde ein hellviolettes Pulver erhalten.

### Beispiel 5

### Polymerisation

In einen 10I-Autoklaven, der mit Argon inertisiert worden war, wurden 5000 ml Isobutan und 2,6 ml einer 20 gew.-%igen Butyl-Octyl-Magnesium-Lösung in Heptan (entsprechend 130 mg Butyl-Octyl-Magnesium) gegeben und schließlich 554 mg des in Beispiel 4 b) erhaltenen Katalysatorfeststoffs zudosiert. Es wurde 90 min bei 40 bar Ethylendruck und 70°C polymerisiert Die Polymerisation wurde durch Ablassen des Drucks abgebrochen und das Produkt durch das Bodenventil ausgetragen. Es wurden 1600 g Polyethylen mit einem eta-Wert von 14,36 dl/g erhalten.
Produktivität 2900 g PElg Katalysatorfeststoff

### Vergleichsbeispiel V12

### Polymerisation

In einen 10I-Autoklaven, der mit Argon inertisiert worden war, wurden 5000 ml Isobutan und 80 mg Butyl-Lithium (als 0,1 M Lösung in Heptan) gegeben und schließlich 342 mg des in Beispiel 4 b) erhaltenen Katalysatorfeststoffs zudosiert. Es wurde 60 min bei 40 bar Ethylendruck und 70°C polymerisiert. Die Polymerisation wurde durch Ablassen des Drucks abgebrochen, das Produkt durch das Bodenventil ausgetragen und mit methanolischer HCl-Lösung (15 ml konzentrierte Salzsäure in 50 ml Methanol) versetzt. Anschließend wurden 250 ml Methanol zugegeben, das entstandene weiße Polymer abfiltriert, mit Methanol gewaschen und bei 70°C getrocknet. Es wurden 400 g Polyethylen mit einem eta-Wert von 15,57 dl/g erhalten.
Produktivität 1200 g PE/g Katalysatorfeststoff

### Beispiel 6

### Metallocen/MAO-Beladung

84,6 mg Dichloro-[1-(8-chinolyl)indenyl]chrom (0,231 mmol) wurden in 5 ml einer 4,75 M Lösung von MAO in Toluol der Firma Albemarle und 0,3 ml Toluol gelöst und 15 min bei Raumtemperatur gerührt (Cr:Al = 1:100).

Diese Lösung wurde unter Rühren direkt auf 3,3 g des in Beispiel 4 a) vorbehandelten calcinierten Hydrotalcit gegeben und der Ansatz nach beendeter Zugabe eine Stunde gerührt. Das so erhaltene Reaktionsgemisch wurde unter Vakuum bei Raumtemperatur getrocknet. Es wurde 5g eines grünen Pulvers erhalten.

### Beispiel 7

### Polymerisation

Beispiel 5 wurde wiederholt, jedoch wurden 906 mg des in Beispiel 6 hergestellten Katalysatorfeststoffs eingesetzt und nur für 60 Minuten polymerisiert. Es wurden 1650 g Polyethylen mit einem eta-Wert von 16,6 dl/g erhalten.
Produktivität: 1800 g PE/g Katalysatorfeststoff

### Vergleichsbeispiel V13

### Polymerisation

Vergleichsbeispiel 12 wurde wiederholt, jedoch wurden 965 mg des in Beispiel 6 hergestellten Katalysatorfeststoffs eingesetzt. Es wurden 1050 g Polyethylen mit einem eta-Wert von 46,93 dl/g erhalten.
Produktivität: 1100 g PE/g Katalysatorfeststoff

### Beispiel 8

### Metallocen/MAO-Beladung

340,3 mg [1,3,5-Tris-1-(2-Phenylethyl)-1,3,5-triazacyclohexan]chromtrichlorid (0,61 mmol) wurden in 16,05 ml einer 4,75 M Lösung von MAO in Toluol der Firma Albemarle (entspr. 76,25 mmol Al) gelöst und 15 min bei Raumtemperatur gerührt (Cr:Al = 1:125).

Diese Lösung wurde unter Rühren direkt auf 6,1 g des in Beispiel 4 a) vorbehandelten calcinierten Hydrotalcit gegeben und der Ansatz nach beendeter Zugabe eine Stunde gerührt. Das so erhaltene Reaktionsgemisch wurde unter Vakuum bei Raumtemperatur getrocknet. Es wurde 10,5 g eines hellgrünen Pulvers erhalten.

### Beispiel 9

### Polymerisation

Beispiel 5 wurde wiederholt, jedoch wurden 117 mg des in Beispiel 8 hergestellten Katalysatorfeststoffs eingesetzt und nur für 60 Minuten polymerisiert. Es wurden 76 g Polyethylen mit einem eta-Wert von 1,39 dl/g erhalten.
Produktivität: 650 g PE/g Katalysatorfeststoff

## Patentansprüche

1. Katalysatorsystem zur Olefinpolymerisation, enthaltend
A) mindestens ein calciniertes Hydrotalcit,
B) mindestens eine Organoübergangsmetallverbindung,
C) optional eine oder mehrere kationenbildende Verbindung und
D) mindestens eine Organomagnesiumverbindung.

2. Katalysatorsystem nach Anspruch 1, wobei als calciniertes Hydrotalcit ein Aluminium-Magnesium-Mischoxid eingesetzt wird.

3. Katalysatorsystem nach Anspruch 1 oder 2, wobei die Organomagnesiumverbindung D) mindestens einen C₁-C₂₀-Kohlenwasserstoffrest enthält

4. Katalysatorsystem nach Anspruch 2 oder 3, wobei die kationenbildende Verbindung C) eine offenkettige oder cyclische Aluminoxanverbindung der allgemeinen Formel (X) oder (XI) ist, 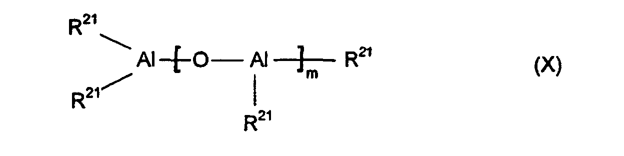 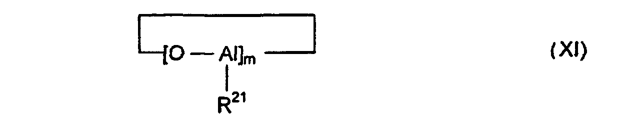 in denen
R²¹ eine C₁-C₄-Alkylgruppe bedeutet und m für eine ganze Zahl von 5 bis 30 steht.

5. Katalysatorsystem nach den Ansprüchen 1 bis 4, wobei das Katalysatorsystem als weitere Komponente E) eine oder mehrere Metallverbindungen der allgemeinen Formel (XV),
M^{F}(R^{1F})ᵣ^{F}(R^{2F})ₛ^{F}(R^{3F})ₜ^{F} (XV)
in der
M^{F} Li, Na, K, Be, Ca, Sr, Ba, Bor, Aluminium, Gallium, Indium oder Thallium bedeutet,
R^{1F} Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
R^{2F} und R^{3F} Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
r^{F} eine ganze Zahl von 1 bis 3
und
s^{F} und t^{F} ganze Zahlen von 0 bis 2 bedeuten, wobei die Summe r^{F}+s^{F}+t^{F} der Wertigkeit von M^{F} entspricht,
enthält.

6. Vorpolymerisiertes Katalysatorsystem, enthaltend ein Katalysatorsystem nach den Ansprüchen 1 bis 5 und hinzupolymerisierte lineare C₂-C₁₀-1-Alkene im Massenverhältnis von 1:0,1 bis 1:200.

7. Verwendung eines Katalysatorsystems nach den Ansprüchen 1 bis 6 zur Polymerisation oder Copolymerisation von Olefinen.

8. Verfahren zur Herstellung von Polyolefinen durch Polymerisation oder Copolymerisation von Olefinen in Gegenwart eines Katalysatorsystems nach den Ansprüchen 1 bis 6.

9. Verfahren nach Anspruch 8, **dadurch gekennzeichnet dass**, bei der Polymerisation als Monomere Ethylen oder eine Monomermischung aus Ethylen und/oder C₃-C₁₂-1-Alkene, die mindestens 50 mol-% Ethylen aufweist, verwendet werden.

## Claims

1. A catalyst system for olefin polymerization comprising
A) at least one calcined hydrotalcite,
B) at least one organic transition metal compound,
C) optionally one or more cation-forming compounds and
D) at least one organic magnesium compound.

2. A catalyst system as claimed in claim 1, wherein an aluminum-magnesium mixed oxide is used as calcined hydrotalcite.

3. A catalyst system as claimed in claim 1 or 2, wherein the organic magnesium compound D) contains at least one C₁-C₂₀ hydrocarbon radical.

4. A catalyst system as claimed in claim 2 or 3, wherein the cation-forming compound C) is an open-chain or cyclic aluminoxane compound of the formula (X) or (XI) 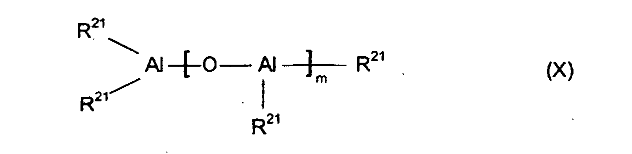 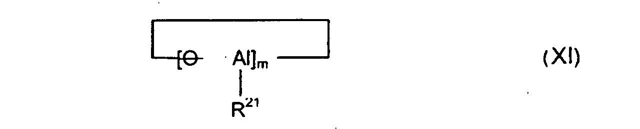 where
R²¹ is a C₁-C₄-alkyl group and m is an integer from 5 to 30.

5. A catalyst system as claimed in any of claims 1 to 4 which further comprises, as additional component E), one or more metal compounds of the formula (XV)
M^{F}(R^{1F})ᵣ^{F}(R^{2F})ₛ^{F}(R^{3F})ₜ^{F} (XV)
where
M^{F} is Li, Na, K, Be, Ca, Sr, Ba, boron, aluminum, gallium, indium or thallium,
R^{1F} is hydrogen, C₁-C₁₀-alkyl, C₆-C₁₅-aryl, alkylaryl or arylalkyl each having from 1 to 10 carbon atoms in the alkyl part and from 6 to 20 carbon atoms in the aryl part,
R^{2F} and R^{3F} are each hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
r^{F} is an integer from 1 to 3,
and
s^{F} and t^{F} are integers from 0 to 2, with the sum r^{F}+s^{F}+t^{F} corresponding to the valence of M^{F}.

6. A prepolymerized catalyst system comprising a catalyst system as claimed in any of claims 1 to 5 and linear C₂-C₁₀-1-alkenes polymerized onto it in a mass ratio of from 1:0.1 to 1:200.

7. The use of a catalyst system as claimed in any of claims 1 to 6 for the polymerization or copolymerization of olefins.

8. A process for preparing polyolefins by polymerization or copolymerization of olefins in the presence of a catalyst system as claimed in any of claims 1 to 6.

9. A process as claimed in claim 8, wherein the monomer used in the polymerization is ethylene or a monomer mixture of ethylene and/or C₃-C₁₂-1-alkenes containing at least 50 mol% of ethylene.

## Revendications

1. Système catalyseur pour la polymérisation d'oléfines, contenant :
a) au moins une hydrotalcite calcinée,
b) au moins un dérivé organique de métal de transition,
c) facultativement un ou plusieurs composés formant des cations et
d) au moins un dérivé d'organomagnésium.

2. Système catalyseur selon la revendication 1, **caractérisé en ce que** l'hydrotalcite calcinée est un oxyde mixte d'aluminium et de magnésium.

3. Système catalyseur selon revendication 1 ou 2, dans lequel le dérivé d'organomagnésium d) contient au moins un radical hydrocarboné en C1-C20.

4. Système catalyseur selon revendication 2 ou 3, dans lequel le composé formant des cations C) est un aluminoxane acyclique ou cyclique de formule générale X ou XI 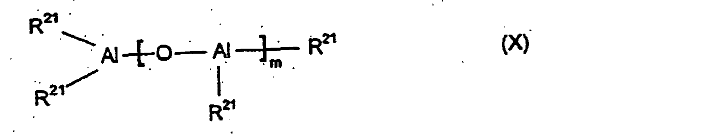 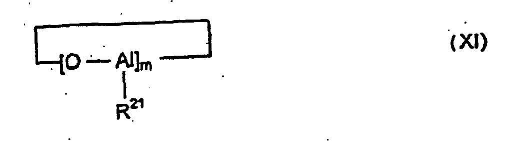 dans lesquelles
R²¹ représente un groupe alkyle en C1-C4 et m est un nombre entier allant de 5 à 30.

5. Système catalyseur selon les revendications 1 à 4 contenant en tant qu'autre composant e) un ou plusieurs dérivés métalliques de formule générale XV
M^{F}(R^{1F})ᵣF(R^{2F})ₛF(R^{3F})ₜ^{F} (XV)
dans laquelle
M^{F} représente Li, Na, K, Be, Ca, Sr, Ba, le bore, l'aluminium, le gallium, l'indium ou le thallium,
R^{1F} représente l'hydrogène, un groupe alkyle en C1-C10, aryle en C6-C15, alkylaryle ou arylalkyle contenant chacun un à dix atomes de carbone dans le groupe alkyle et six à vingt atomes de carbone dans le groupe aryle.
R^{2F} et R^{3F} représentent chacun l'hydrogène, un halogène, un groupe alkyle en C1-C10, aryle en C6-C15, alkylaryle, arylalkyle ou alcoxy contenant chacun un à dix atomes de carbone dans la partie alkyle et six à vingt atomes de carbone dans la partie aryle,
r^{F} représente un nombre entier allant de 1 à 3
et
s^{F} et t^{F} sont des nombres entiers allant de 0 à 2, la somme r^{F} + s^{F} + t^{F} correspondant à la valence de M^{F}

6. Système catalyseur prépolymérisé, contenant un système catalyseur selon les revendications 1 à 5 et, en outre, des 1-alcènes linéaires en C2-C10 polymérisés, à des proportions relatives en poids de 1 : 0,1 à 1 : 200.

7. Utilisation d'un système catalyseur selon les revendications 1 à 6 pour la polymérisation ou la copolymérisation d'oléfines.

8. Procédé pour la préparation de polyoléfines par polymérisation ou copolymérisation d'oléfines en présence d'un système catalyseur selon les revendications 1 à 6.

9. Procédé selon la revendication 6, **caractérisé en ce que**, à la polymérisation, on utilise en tant que monomère l'éthylène ou un mélange de monomères consistant en l'éthylène et/ou des 1-alcènes en C3-C12, à au moins 50 mol % d'éthylène.
